# EUROPEAN PATENT APPLICATION

(11) **EP 4 651 595 A1**
(43) Date of publication of application: **19.11.2025**
(21) Application number: 24755912.3
(22) Date of filing: 23.01.2024
(51) Int. Cl.: H04W 72/0453, H04B 5/00

(54) **DATA TRANSMISSION METHOD, AND COMMUNICATION APPARATUS**

(30) Priority: 17.02.2023 CN 202310176007
(71) Applicant: Huawei Technologies Co., Ltd., Shenzhen, Guangdong 518129 (CN)
(72) Inventor: LI, Chenwan, Shenzhen, Guangdong 518129 (CN); WU, Yiling, Shenzhen, Guangdong 518129 (CN); CHEN, Lei, Shenzhen, Guangdong 518129 (CN); LIN, Hui, Shenzhen, Guangdong 518129 (CN)
(74) Representative: Pfenning, Meinig & Partner mbB
(86) International application number: PCT/CN2024/073630
(87) International publication number: WO 2024/169537

(57) **Abstract**

This application provides a data transmission method and a communication apparatus. The method includes: sending a first message, where the first message includes identification information of a first terminal device and information about a first carrier corresponding to the first terminal device; and transmitting data with the first terminal device by using the first carrier. Based on the method described in this application, a carrier used for data transmission can be flexibly configured for a terminal device, thereby improving system performance.

## Description

This application claims priority to Chinese Patent Application No. 202310176007.8, filed with the China National Intellectual Property Administration on February 17, 2023, and entitled "DATA TRANSMISSION METHOD AND COMMUNICATION APPARATUS", which is incorporated herein by reference in its entirety.

### TECHNICAL FIELD

This application relates to the field of communication technologies, and in particular, to a data transmission method and a communication apparatus.

### BACKGROUND

A radio frequency identification (radio frequency identification, RFID) technology is one of automatic identification technologies, and implements non-contact bidirectional data communication through wireless radio frequency. RFID is mainly used for identity identification. In some scenarios, RFID can also be used to read and write user data. A radio frequency identification system includes a reader (reader) and a tag (tag). The reader can read tag information in the tag or write tag information into the tag. Currently, when a terminal device (for example, a tag) communicates with a communication device (for example, a reader), the terminal device can communicate with the communication device only by using a fixed or default carrier, which is not conducive to improving system performance.

### SUMMARY

Embodiments of this application provide a data transmission method and a communication apparatus, so that a communication carrier can be flexibly configured for a terminal device, thereby improving system performance.

According to a first aspect, this application provides a data transmission method. Optionally, the method may be performed by a communication device, or may be performed by a component (such as a processor, a chip, or a chip system) of the communication device, or may be implemented by a logical module or software that can implement all or some functions of the communication device. The method includes:
sending a first message, where the first message includes identification information of a first terminal device and information about a first carrier corresponding to the first terminal device; and transmitting data with the first terminal device by using the first carrier.

Based on the method described in the first aspect, a carrier used for data transmission can be flexibly configured for a terminal device, thereby improving system performance.

In a possible implementation, the first message further includes identification information of a second terminal device and information about a second carrier corresponding to the second terminal device, and data may be further transmitted with the second terminal device by using the second carrier.

In this possible implementation, the first message may indicate a plurality of terminal devices and a carrier corresponding to each terminal device, so that the plurality of terminal devices can simultaneously transmit data with the communication device by using different carriers. In this way, concurrent transmission between a plurality of users and the communication device can be implemented, thereby helping increase a system capacity.

In a possible implementation, the first message is a paging message or a select instruction.

In a possible implementation, the identification information is one piece of the following information: an identifier allocated by a core network, a subscriber identity module SIM card identifier, an application layer identifier, or a terminal device group identifier.

In a possible implementation, the information about the first carrier is a first bitmap, the first bitmap includes M bits, the M bits are in a one-to-one correspondence with M carriers, M is an integer greater than 1, a bit value of the first bitmap indicates a carrier corresponding to the first terminal device, and the carrier corresponding to the first terminal device includes the first carrier.

The first carrier corresponding to the first terminal device can be accurately indicated by using the first bitmap, and this helps reduce indication overheads.

In a possible implementation, transmitting data with the first terminal device by using the first carrier includes: receiving, by using the first carrier, uplink data sent by the first terminal device; and
the method further includes: sending feedback information, where the feedback information indicates whether uplink data on M carriers is successfully transmitted, the M carriers include the first carrier, and M is an integer greater than 1; the feedback information includes a second bitmap, the second bitmap includes M bits, the M bits are in a one-to-one correspondence with the M carriers; a value of a first bit indicates whether uplink data on a carrier corresponding to the first bit is successfully transmitted, and the first bit is any bit in the second bitmap.

Based on this possible implementation, a transmission status of uplink data can be jointly fed back to terminal devices corresponding to a plurality of carriers by using one piece of feedback information. This helps reduce feedback overheads.

In a possible implementation, the first carrier corresponds to a plurality of terminal devices, and after transmitting data with the first terminal device by using the first carrier, a second message may be further sent. The second message is used to trigger, for a plurality of carriers, a next terminal device to transmit data by using a corresponding carrier, and the plurality of carriers include the first carrier.

Based on this possible implementation, for different carriers, one same message may be used to trigger a next terminal device to transmit data by using a corresponding carrier. This helps reduce indication overheads. In addition, in this possible implementation, the terminal device may not perform random access, thereby helping save transmission resources.

In another possible implementation, the first carrier corresponds to a plurality of terminal devices, and after transmitting data with the first terminal device by using the first carrier, a second message may be further sent. The second message is used to trigger a next terminal device to transmit data by using the first carrier, and the second message includes indication information indicating the first carrier, or the second message is carried on the first carrier.

Based on this possible implementation, for different carriers, different messages are used to trigger a next terminal device corresponding to the carriers to perform data transmission. In this way, the next terminal device corresponding to the different carriers can be more flexibly triggered to perform data transmission. In addition, in this possible implementation, the terminal device may not perform random access, thereby helping save transmission resources.

In a possible implementation, transmission progresses of a plurality of terminal devices that are performing transmission on different carriers are the same.

Transmission progresses of a plurality of terminal devices that are performing transmission on different carriers are enabled to be the same. This helps avoid a large difference between information transmission duration of the plurality of terminal devices that are performing transmission, thereby helping avoid an uplink resource waste.

In a possible implementation, if a terminal device corresponding to the first carrier succeeds in random access and a terminal device corresponding to the second carrier fails in random access in a same random access slot, next random access on the second carrier is triggered after the terminal device that succeeds in random access and that corresponds to the first carrier completes data transmission.

Based on this possible implementation, transmission progresses of a plurality of terminal devices that are performing transmission on different carriers are enabled to be the same, thereby avoiding an uplink resource waste.

In a possible implementation, if data transmission with the first terminal device by using the first carrier fails, retransmission scheduling is not performed for data transmitted by the first terminal device.

Based on this possible implementation, transmission progresses of a plurality of terminal devices that are performing transmission on different carriers are enabled to be the same, thereby avoiding an uplink resource waste.

In a possible implementation, the carrier may alternatively be replaced with a process.

According to a second aspect, this application provides a data transmission method. Optionally, the method may be performed by a first terminal device, or may be performed by a component (such as a processor, a chip, or a chip system) of the first terminal device, or may be implemented by a logical module or software that can implement all or some functions of the first terminal device. The method includes:
receiving a first message sent by a communication device, where the first message includes identification information of the first terminal device and information about a first carrier corresponding to the first terminal device; and transmitting data with the communication device by using the first carrier.

In a possible implementation, the first message further includes identification information of a second terminal device and information about a second carrier corresponding to the second terminal device.

In a possible implementation, the first message is a paging message or a select instruction.

In a possible implementation, the identification information is one piece of the following information: an identifier allocated by a core network, a subscriber identity module SIM card identifier, an application layer identifier, or a terminal device group identifier.

In a possible implementation, the information about the first carrier is a first bitmap, the first bitmap includes M bits, the M bits are in a one-to-one correspondence with M carriers, M is an integer greater than 1, a bit value of the first bitmap indicates a carrier corresponding to the first terminal device, and the carrier corresponding to the first terminal device includes the first carrier.

In a possible implementation, transmitting data with the communication device by using the first carrier includes: sending uplink data to the communication device by using the first carrier; and
the method further includes: receiving feedback information sent by the communication device, where the feedback information indicates whether uplink data on M carriers is successfully transmitted, the M carriers include the first carrier, and M is an integer greater than 1; the feedback information includes a second bitmap, the second bitmap includes M bits, the M bits are in a one-to-one correspondence with the M carriers; a value of a first bit indicates whether uplink data on a carrier corresponding to the first bit is successfully transmitted, and the first bit is any bit in the second bitmap.

In a possible implementation, the carrier may alternatively be replaced with a process.

For beneficial effects of the second aspect, refer to beneficial effects of the first aspect. Details are not described herein.

According to a third aspect, this application provides a data transmission method. Optionally, the method may be performed by a communication device, or may be performed by a component (such as a processor, a chip, or a chip system) of the communication device, or may be implemented by a logical module or software that can implement all or some functions of the communication device. The method includes:
sending a first message and a second message, where the first message indicates a first device group, the first device group includes one or more terminal devices, the second message indicates a second device group, and the second device group includes one or more terminal devices; and transmitting data with a terminal device in the first device group by using a first carrier, and transmitting data with a terminal device in the second device group by using a second carrier.

Based on the method described in the third aspect, a plurality of device groups may perform transmission by using different carriers, and not all device groups perform transmission by using a same carrier. This helps improve transmission flexibility and improve system performance.

In a possible implementation, the second message is transmitted before transmission by some or all devices in the first device group is completed. In this way, different device groups may perform transmission with the communication device on different carriers at the same time. In this way, concurrent transmission between a plurality of users and the communication device can be implemented, thereby helping increase a system capacity.

In a possible implementation, the first message and the second message are paging messages or select instructions.

In a possible implementation, the first message further includes first indication information, the second message further includes second indication information, the first indication information indicates the first carrier, and the second indication information indicates the second carrier.

Because the communication apparatus knows a load status of each carrier, based on this possible implementation, the communication device can properly configure a corresponding carrier for each device group, which helps improve system performance.

In a possible implementation, transmitting data with the terminal device in the first device group by using the first carrier, and transmitting data with the terminal device in the second device group by using the second carrier includes: receiving, by using the first carrier, uplink data sent by the terminal device in the first device group; and receiving, by using the second carrier, uplink data sent by the terminal device in the second device group; and
the method further includes:
sending first feedback information, where the first feedback information indicates whether uplink data on M carriers is successfully transmitted, the M carriers include the first carrier and the second carrier, and M is an integer greater than 1; the first feedback information includes a first bitmap, the first bitmap includes M bits, and the M bits are in a one-to-one correspondence with the M carriers; and a value of a first bit indicates whether uplink data on a carrier corresponding to the first bit is successfully transmitted, and the first bit is any bit in the first bitmap.

Based on this possible implementation, a transmission status of uplink data can be jointly fed back to terminal devices in a plurality of terminal device groups by using one piece of feedback information. This helps reduce feedback overheads.

In a possible implementation, before transmitting data with the terminal device in the first device group by using the first carrier, and transmitting data with the terminal device in the second device group by using the second carrier, the method further includes:
receiving, by using the first carrier, a first random number sent by the terminal device in the first device group;
receiving, by using the second carrier, a second random number sent by the terminal device in the second device group; and
sending second feedback information and third feedback information, or sending fourth feedback information, where the second feedback information indicates that the first random number is successfully transmitted, the third feedback information indicates that the second random number is successfully transmitted, and the fourth feedback information indicates that the first random number and the second random number are successfully transmitted.

In a possible implementation, before receiving, by using the first carrier, the first random number sent by the terminal device in the first device group, and receiving, by using the second carrier, the second random number sent by the terminal device in the second device group, the method further includes:
sending a third message, where the third message is used to trigger random access or trigger next random access on the first carrier and the second carrier.

Based on this possible implementation, for different carriers, random access on the carriers or next random access on the carriers may be triggered by using one same message. This helps reduce indication overheads.

In a possible implementation, the first message includes a first flag bit, the second message includes a second flag bit, the first flag bit is different from the second flag bit, the first flag bit is used by the terminal device in the first device group to determine whether to respond to a received instruction, and the second flag bit is used by the terminal device in the second device group to determine whether to respond to a received instruction.

Based on this possible implementation, a problem of flag bit flipping interference caused by existence of a plurality of services is avoided.

In a possible implementation, transmission progresses of a plurality of terminal devices that are performing transmission on different carriers are the same.

Transmission progresses of a plurality of terminal devices that are performing transmission on different carriers are enabled to be the same. This helps avoid a large difference between information transmission duration of the plurality of terminal devices that are performing transmission, thereby helping avoid an uplink resource waste.

In a possible implementation, in a same random access slot, if the terminal device in the first device group successfully performs random access on the first carrier, and the terminal device in the second device group fails to perform random access on the second carrier, next random access on the second carrier is triggered after the terminal device that successfully performs random access in the first device group completes data transmission.

Based on this possible implementation, transmission progresses of a plurality of terminal devices that are performing transmission on different carriers are enabled to be the same, thereby avoiding an uplink resource waste.

In a possible implementation, if data transmission with the terminal device in the first device group by using the first carrier fails, retransmission scheduling is not performed for data transmitted by the terminal device in the first device group.

Based on this possible implementation, transmission progresses of a plurality of terminal devices that are performing transmission on different carriers are enabled to be the same, thereby avoiding an uplink resource waste.

In a possible implementation, the carrier may alternatively be replaced with a process.

Optionally, the first device group and the second device group may transmit different services.

Optionally, scheduling technologies of different quality of service (quality of service, QoS) may be used for terminal devices in different groups, to distinguish between different services.

According to a fourth aspect, this application provides a data transmission method. Optionally, the method may be performed by a first terminal device, or may be performed by a component (such as a processor, a chip, or a chip system) of the first terminal device, or may be implemented by a logical module or software that can implement all or some functions of the first terminal device. The method includes:
receiving a first message and a second message that are sent by a communication device, where the first message indicates a first device group, the first device group includes one or more terminal devices, the second message indicates a second device group, and the second device group includes one or more terminal devices; and
if the first terminal device belongs to the terminal device in the first device group, transmitting data with the communication device by using a first carrier; or
if the first terminal device belongs to the terminal device in the second device group, transmitting data with the communication device by using a second carrier.

In a possible implementation, the second message is transmitted before all devices in the first device group complete transmission.

In a possible implementation, the first message and the second message are paging messages or select instructions.

In a possible implementation, the first message further includes first indication information, the second message further includes second indication information, the first indication information indicates the first carrier, and the second indication information indicates the second carrier.

In a possible implementation, transmitting data with the communication device by using the first carrier includes: sending uplink data to the communication device by using the first carrier; and
transmitting data with the communication device by using the second carrier includes: sending uplink data to the communication device by using the second carrier; and
the method further includes:
   receiving first feedback information sent by the communication device, where the first feedback information indicates whether uplink data on M carriers is successfully transmitted, the M carriers include the first carrier and the second carrier, and M is an integer greater than 1; the first feedback information includes a first bitmap, the first bitmap includes M bits, and the M bits are in a one-to-one correspondence with the M carriers; and a value of a first bit indicates whether uplink data on a carrier corresponding to the first bit is successfully transmitted, and the first bit is any bit in the first bitmap.

In a possible implementation, before transmitting data with the communication device by using the first carrier, the method further includes:
sending a first random number to the communication device by using the first carrier; and receiving second feedback information or fourth feedback information sent by the communication device, where the second feedback information indicates that the first random number is successfully transmitted; and
before transmitting data with the communication device by using the second carrier, the method further includes:
   sending a second random number to the communication device by using the second carrier; and receiving third feedback information or the fourth feedback information sent by the communication device, where the third feedback information indicates that the second random number is successfully transmitted.

In a possible implementation, before sending the first random number to the communication device by using the first carrier, or before sending the second random number to the communication device by using the second carrier, the method further includes: receiving a third message sent by the communication device, where the third message is used to trigger random access or trigger next random access on the first carrier and the second carrier.

In a possible implementation, the first message includes a first flag bit, the second message includes a second flag bit, the first flag bit is different from the second flag bit, the first flag bit is used by the terminal device in the first device group to determine whether to respond to a received instruction, and the second flag bit is used by the terminal device in the second device group to determine whether to respond to a received instruction.

In a possible implementation, the carrier may alternatively be replaced with a process.

Optionally, the first device group and the second device group may transmit different services.

Optionally, scheduling technologies of different QoS may be used for terminal devices in different groups, to distinguish between different services.

For beneficial effects of the fourth aspect, refer to the beneficial effects of the third aspect. Details are not described herein again.

According to a fifth aspect, this application provides a communication apparatus. The communication apparatus may be the foregoing communication device or first terminal device, or may be an apparatus in the foregoing communication device or first terminal device, or may be an apparatus that can be matched with the foregoing communication device or first terminal device for use. The communication apparatus may alternatively be a chip system. The communication apparatus may perform the method according to the first aspect, the second aspect, the third aspect, or the fourth aspect. A function of the communication apparatus may be implemented by hardware, or may be implemented by hardware executing corresponding software. The hardware or the software includes one or more units or modules corresponding to the foregoing function. The unit or module may be software and/or hardware. For operations performed by the communication apparatus and beneficial effect, refer to the method and the beneficial effect in the first aspect, the second aspect, the third aspect, or the fourth aspect.

According to a sixth aspect, this application provides a communication apparatus, where the communication apparatus includes a processor, and when the processor invokes a computer program in a memory, the method according to the first aspect, the second aspect, the third aspect, or the fourth aspect is performed.

According to a seventh aspect, this application provides a communication apparatus. The communication apparatus includes a processor and a memory, and the processor is coupled to the memory. The processor is configured to implement the method according to the first aspect, the second aspect, the third aspect, or the fourth aspect.

According to an eighth aspect, this application provides a communication apparatus. The communication apparatus includes a processor, a memory, and a transceiver, and the processor is coupled to the memory. The transceiver is configured to send and receive data, and the processor is configured to implement the method according to the first aspect, the second aspect, the third aspect, or the fourth aspect.

According to a ninth aspect, this application provides a chip, where the chip includes a processor and an interface, the processor is coupled to the interface, the interface is configured to receive or output a signal, and the processor is configured to execute a code instruction, so that the method according to the first aspect, the second aspect, the third aspect, or the fourth aspect is performed.

According to a tenth aspect, this application provides a computer-readable storage medium. The storage medium stores a computer program or instructions. When the computer program or the instructions are executed by a device, the method according to the first aspect, the second aspect, the third aspect, or the fourth aspect is implemented.

According to an eleventh aspect, this application provides a communication system. The communication system includes a communication device and a first terminal device. The communication device is configured to perform the method in the first aspect, and the first terminal device is configured to perform the method in the second aspect. Alternatively, the communication device is configured to perform the method in the third aspect, and the first terminal device is configured to perform the method in the fourth aspect.

According to a twelfth aspect, this application provides a computer program product including instructions. When a computer reads and executes the computer program product, a computer is enabled to perform the method according to the first aspect, the second aspect, the third aspect, or the fourth aspect.

### BRIEF DESCRIPTION OF DRAWINGS

FIG. 1 is a diagram of a system architecture according to this application;
FIG. 2 is a schematic flowchart of a data transmission method according to this application;
FIG. 3 is a schematic flowchart of a data transmission method according to this application;
FIG. 4 is a schematic flowchart of a data transmission method according to this application;
FIG. 5 is a schematic flowchart of a data transmission method according to this application;
FIG. 6 is a schematic flowchart of a data transmission method according to this application;
FIG. 7 is a schematic flowchart of a data transmission method according to this application;
FIG. 8 is a schematic flowchart of a data transmission method according to this application;
FIG. 9 is a schematic flowchart of a data transmission method according to this application;
FIG. 10 is a schematic flowchart of a data transmission method according to this application;
FIG. 11 is a schematic flowchart of a data transmission method according to this application;
FIG. 12 is a schematic flowchart of a data transmission method according to this application;
FIG. 13 is a schematic flowchart of a data transmission method according to this application;
FIG. 14 is a schematic flowchart of a data transmission method according to this application;
FIG. 15 is a schematic flowchart of a data transmission method according to this application;
FIG. 16 is a schematic flowchart of a data transmission method according to this application;
FIG. 17 is a diagram of a structure of a communication apparatus according to this application;
FIG. 18 is a diagram of a structure of another communication apparatus according to this application; and
FIG. 19 is a diagram of a structure of a chip according to this application.

### DESCRIPTION OF EMBODIMENTS

The following further describes specific embodiments of this application in detail with reference to accompanying drawings.

In the specification, the claims, and the accompanying drawings of this application, the terms "first", "second", and the like are intended to distinguish between different objects but do not indicate a particular order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

"Embodiments" mentioned herein mean that specific features, structures, or characteristics described in combination with embodiments may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

In this application, "at least one (item)" means one or more, "a plurality of" means two or more, "at least two (items)" means two or three or more, and "and/or" is used to describe an association relationship between associated objects, which indicates that three relationships may exist. For example, "A and/or B" may indicate three cases: only A exists, only B exists, and both A and B exist. A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one of a, b, or c may indicate a, b, c, a and b, a and c, b and c, or a, b, and c, where a, b, and c may be singular or plural.

To better understand embodiments of this application, the following first describes a system architecture in embodiments of this application.

The technical solutions in embodiments of this application may be applied to various communication systems, for example, a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system, a new radio (new radio, NR) system, a future communication system, or the like.

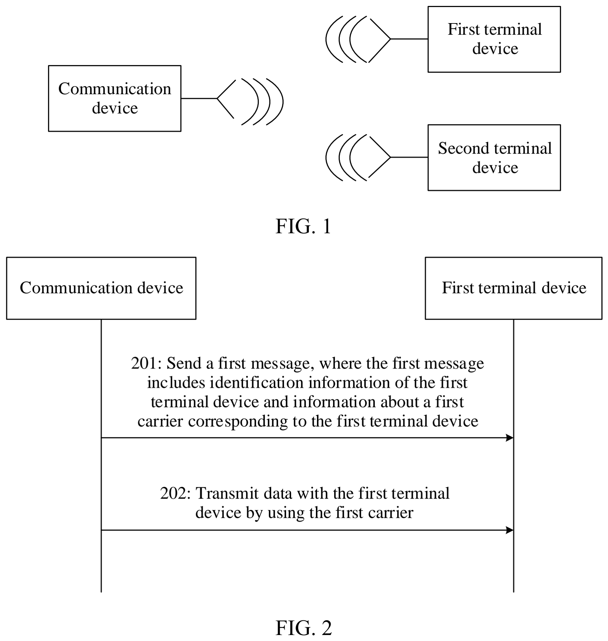

FIG. 1 is a diagram of a system architecture according to an embodiment of this application. As shown in FIG. 1, the system architecture includes a communication device and one or more terminal devices. In FIG. 1, an example in which the system architecture includes a first terminal device and a second terminal device is used. Certainly, a quantity of terminal devices that communicate with the communication device in the system architecture may be greater than 2. This is not limited in this embodiment of this application.

The communication device in this embodiment of this application may be a network device or a terminal device. If the communication device is a network device, the communication device is connected to the first terminal device (or the second terminal device) through Uu (air interface). If the communication device is a terminal device, the communication device is connected to the first terminal device (or the second terminal device) through a sidelink.

The network device in this embodiment of this application may be an access network device, an integrated access and backhaul (integrated access and backhaul, IAB) node, or a relay (relay) node. The access network device is a node or a device that connects a terminal device to a wireless network. For example, the access network device includes but is not limited to: an evolved NodeB (NodeB or eNB or e-NodeB, evolved NodeB) in LTE, a base station (gNodeB or gNB) or a transmission reception point (Transmission Reception Point, TRP) in NR, a base station that is evolved subsequently in 3GPP, an access node in a Wi-Fi system, a wireless relay node, a wireless backhaul node, and the like. The base station may be a macro base station, a micro base station, a pico base station, a small cell, a relay station, a balloon station, or the like. Alternatively, the access network device may be a radio controller, a central unit (Central Unit, CU), and/or a distributed unit (Distributed Unit, DU) in a cloud radio access network (Cloud Radio Access Network, CRAN) scenario.

A terminal device in this embodiment of this application may be a device having a wireless transceiver function. The terminal device may be deployed on land, including an indoor or outdoor terminal device, a handheld terminal device, a wearable terminal device, or a vehicle-mounted terminal device; or may be deployed on a water surface (for example, on a ship); or may be deployed in air (for example, on an airplane, a balloon, or a satellite). For example, the terminal device may be a mobile phone (mobile phone), a tablet computer (Pad), a computer having a wireless transceiver function, a virtual reality (VR) terminal device, an augmented reality (AR) terminal device, a wireless terminal in industrial control (industrial control), a vehicle-mounted terminal device, a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a wearable terminal device, or a tag.

In a possible implementation, the communication device in this embodiment of this application may be a handheld or fixed device that can read (and sometimes may write) tag information. In other words, the communication device may be a reader (also referred to as an RFID reader). For example, the communication device may be a network device having a read/write function or a terminal device having a read/write function. In this embodiment of this application, a terminal device (for example, the first terminal device and the second terminal device) that communicates with the communication device may be a tag (which may also be referred to as an electronic tag or an RFID tag).

Tags can be classified into a passive tag (passive tag), a semi-passive tag (semi-passive tag), and an active tag (active tag). The passive tag may also be referred to as a passive tag, the semi-passive tag may also be referred to as a semi-active tag, and the active tag may also be referred to as an active tag. The passive tag and the semi-passive tag communicate with the reader based on a backscatter (backscatter) carrier. The active tag may actively generate a carrier to communicate with the reader. Alternatively, the tag may not be called the foregoing name, but called a device type A (1): having no energy storage, and having no independent signal generation capability, which may be understood as working based on backscatter (backscatter); a device type B (2): having energy storage, having no independent signal generation capability, that is, working based on backscatter, and using energy to amplify a backscattering signal; or a device type C (3): having energy storage, and having an independent signal generation capability, that is, an active RF component. The tag may also be referred to as an Ambient IoT (Internet of Things) UE. 5G Ambient IoT emerges because of advantages of an RFID communication technology in low power consumption. To meet an ultra-low power consumption requirement, a terminal device in Ambient IoT also uses a low-precision medium-to-low frequency ring oscillator with low power consumption to receive a downlink signal or receives a downlink signal without a local oscillator. In this receiving manner, downlink receiving power consumption of the terminal device can be further reduced. However, for this low-power consumption receiving manner, only amplitude detection such as envelope detection can be performed, because only a low-precision ring oscillator cannot ensure accurate demodulation of signal phase information.

The type of the tag may also be classified in another dimension, for example, classified based on a working frequency, or classified based on a packaging type, or classified based on an impact medium.

The following further describes a data transmission method and a communication device that are provided in embodiments of this application.

FIG. 2 is a flowchart of a data transmission method according to an embodiment of this application. The data transmission method includes steps 201 and 202. The method shown in FIG. 2 may be performed by a communication device and a first terminal device, or may be performed by a chip in the communication device and a chip in the first terminal device. Alternatively, the method shown in FIG. 2 may be performed by another type of product, and a person skilled in the art may make further extension according to the content disclosed in the specification. An example in which the method shown in FIG. 2 is performed by the communication device and the first terminal device is used.

201: The communication device sends a first message, where the first message includes identification information of the first terminal device and information about a first carrier corresponding to the first terminal device. Correspondingly, the first terminal device may receive the first message.

In a possible implementation, the first message may be a paging message (paging message) or a select (select) instruction. Alternatively, the first message may have another name. This is not limited in this embodiment of this application.

In this embodiment of this application, the identification information of the first terminal device is information used to determine the first terminal device.

In a possible implementation, the identification information of the first terminal device is one piece of the following information: an identifier allocated by a core network, a subscriber identity module (subscriber identity module, SIM) card identifier, an application layer identifier, a terminal device group identifier, a selection condition used to select the first terminal device or a character string used to determine the first terminal device, a newly defined identifier (an operator identifier (PLMN ID) + an enterprise identifier + a product electronic identifier (such as an EPC)), an identifier stored in a storage area, or a pre-written identifier allocated by an operator or product identifier.

Optionally, the selection condition used to select the first terminal device may be carried in a non-access stratum (non-access stratum, NAS) message, a radio resource control (radio resource control, RRC) message, or a NAS message included in RRC.

For example, the identifier allocated by the core network may be a temporary mobile subscriber identity (temporary mobile subscriber identity, TMSI). The SIM card identifier may be a subscription permanent identifier (subscription permanent identifier, SUPI), or a subscription concealed identifier (subscription concealed identifier, SUCI). The application layer identifier may be an electronic product code (electronic product code, EPC).

In this embodiment of this application, the first carrier corresponding to the first terminal device is a carrier used for data transmission between the first terminal device and the communication device, for example, uplink or downlink transmission.

In this embodiment of this application, the information about the first carrier is information indicating the first carrier. For example, the information about the first carrier may be an index of the first carrier, a frequency of the first carrier, or other information indicating the first carrier.

202: The communication device transmits data with the first terminal device by using the first carrier. Correspondingly, the first terminal device may also transmit data with the communication device by using the first carrier.

In this embodiment of this application, the first terminal device may send uplink data to the communication device by using the first carrier. Correspondingly, the communication device may receive, by using the first carrier, the uplink data sent by the first terminal device. For example, the uplink data may be an EPC or other data.

Alternatively, the communication device may send downlink data to the first terminal device by using the first carrier. Correspondingly, the first terminal device may also receive, by using the first carrier, the downlink data sent by the communication device.

If the first terminal device is an active tag (or a device type C), the first terminal device may autonomously generate the first carrier to send data. If the first terminal device is a passive tag (or a device type A), the first terminal device may perform, based on a carrier indicated by the first message, frequency shift on a carrier sent by the communication device, and shift the carrier to the first carrier. Because the passive tag performs backscattering on a carrier sent by a reader to send data, if the carrier indicated by the first message is different from the carrier sent by the communication device, the first terminal device may perform frequency shift.

Optionally, the first message may alternatively indicate the first carrier by indicating a shift frequency corresponding to the first carrier. For example, the first message indicates to shift by one carrier location or shift by 180 kHz or more leftward or rightward, to indicate the first carrier.

It can be learned that according to the method described in FIG. 2, the communication device can flexibly configure, for the terminal device, a carrier used for data transmission, thereby improving system performance.

In a possible implementation, the first message further includes identification information of a second terminal device and information about a second carrier corresponding to the second terminal device, and the communication device may further transmit data with the second terminal device by using the second carrier. Correspondingly, the second terminal device may transmit data with the communication device by using the second carrier. Optionally, the data may be uplink data or downlink data. For example, the uplink data may be an EPC or other data. Optionally, data transmitted between the terminal device and the communication device may be carried in a NAS message, or may be transmitted by using a user plane, for example, a packet data convergence protocol (packet data convergence protocol, PDCP), a radio link control protocol (radio link control protocol, RLC), or a medium access control protocol (media access control protocol, MAC) packet.

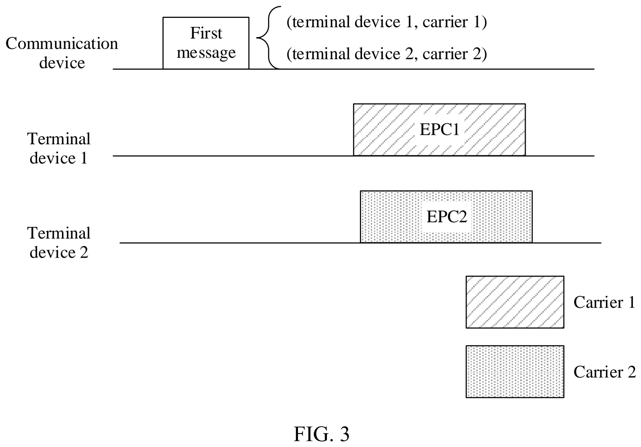

For example, as shown in FIG. 3, the communication device sends a first message to a terminal device 1 and a terminal device 2. The first message includes identification information of the terminal device 1, information about a carrier 1 corresponding to the terminal device 1, identification information of the terminal device 2, and information about a carrier 2 corresponding to the terminal device 2. After receiving the first message, the terminal device 1 sends an EPC 1 to the communication device by using the carrier 1. Correspondingly, the communication device receives, by using the carrier 1, the EPC1 sent by the terminal device 1. Similarly, after receiving the first message, the terminal device 2 sends an EPC2 to the communication device by using the carrier 2. Correspondingly, the communication device receives, by using the carrier 2, the EPC2 sent by the terminal device 2. In FIG. 3, an example in which the communication device transmits data with two terminal devices by using corresponding carriers is used. Certainly, the communication device may alternatively transmit data with more than two terminal devices by using corresponding carriers. This is not limited in embodiments of this application.

It can be learned that in this possible implementation, the communication device may indicate, by using the first message, a plurality of terminal devices and a carrier corresponding to each terminal device, so that the plurality of terminal devices can simultaneously transmit data with the communication device by using different carriers. In this way, concurrent transmission between a plurality of users and the communication device can be implemented, thereby helping increase a system capacity.

In a possible implementation, when the first message includes identification information of a plurality of terminal devices and information about a carrier corresponding to each terminal device, the first message has the following several possible implementations of indicating the terminal device and the carrier corresponding to the terminal device:
Manner 1: The first message includes identification information of one or more terminal devices, and for identification information of each terminal device, the first message includes information about a carrier corresponding to the terminal device.

In a possible implementation, the information about the first carrier is a first bitmap, the first bitmap includes M bits, the M bits are in a one-to-one correspondence with M carriers, M is an integer greater than 1, a bit value of the first bitmap indicates a carrier corresponding to the first terminal device, and the carrier corresponding to the first terminal device includes the first carrier.

For example, the first message includes (the identification information of the terminal device 1, and a bitmap 1) and (the identification information of the terminal device 2, and a bitmap 2). The bitmap 1 is 110. The bitmap 2 is 001. In the bitmap 1, the 1^{st} bit corresponds to the carrier 1, the 2^{nd} bit corresponds to the carrier 2, and the 3^{rd} bit corresponds to a carrier 3. Similarly, in the bitmap 2, the 1^{st} bit corresponds to the carrier 1, the 2^{nd} bit corresponds to the carrier 2, and the 3^{rd} bit corresponds to the carrier 3. For example, a carrier corresponding to a bit whose value is 1 is a carrier corresponding to the terminal device. The carrier 1 and the carrier 2 are carriers corresponding to the terminal device 1. The carrier 3 is a carrier corresponding to the terminal device 2. The first carrier corresponding to the first terminal device can be accurately indicated by using the first bitmap, and this helps reduce indication overheads.

Optionally, the first message may further include frequency information of a target carrier. The target carrier is one of a plurality of carriers corresponding to a bitmap. Based on the frequency information of the target carrier, the terminal device can determine frequency information of a carrier corresponding to each bit in the bitmap. For example, the target carrier is a carrier corresponding to the 1^{st} bit in the bitmap. A carrier corresponding to another bit in the bitmap may be a carrier that is offset from the target carrier by a fixed spacing. Assuming that the fixed spacing is 0.180 MHz, a carrier corresponding to the 1^{st} bit is the target carrier, and the terminal device knows that the carrier corresponding to the 1^{st} bit in the bitmap is 700.180 MHz, a carrier corresponding to the 2^{nd} bit in the bitmap is 700.360 MHz, and a carrier corresponding to the 3^{rd} bit in the bitmap is 700.540 MHz.

In a possible implementation, the information about the first carrier may alternatively be an index of the first carrier.

For example, the first message includes (the identification information of the terminal device 1, an index of the carrier 1 corresponding to the terminal device 1, and an index of the carrier 2 corresponding to the terminal device 1) and (the identification information of the terminal device 2, and an index of the carrier 3 corresponding to the terminal device 2).

Manner 2: The first message includes information about one or more carriers, and for information about each carrier, the first message includes identification information of one or more terminal devices corresponding to the carrier.

For example, the first message includes (the index of the carrier 1, the identification information of the terminal device 1 corresponding to the carrier 1, and the identification information of the terminal device 2 corresponding to the carrier 1) and (the index of the carrier 2, identification information of a terminal device 3 corresponding to the carrier 2, and identification information of a terminal device 4 corresponding to the carrier 2).

In a possible implementation, after the communication device receives, by using the first carrier, the uplink data sent by the first terminal device, the communication device may send feedback information, where the feedback information indicates whether uplink data on M carriers is successfully transmitted, the M carriers include the first carrier, and M is an integer greater than 1; the feedback information includes a second bitmap, the second bitmap includes M bits, the M bits are in a one-to-one correspondence with the M carriers; and a value of a first bit indicates whether uplink data on a carrier corresponding to the first bit is successfully transmitted, and the first bit is any bit in the second bitmap. Correspondingly, the first terminal device may receive the feedback information, and a terminal device corresponding to another carrier may also receive the feedback information.

Optionally, each of the M bits may be associated with one carrier index or identification information of one terminal device, for example, a temporary identifier, to enable the M bits to correspond to terminal devices of a plurality of carriers.

Optionally, the M bits may be associated with a plurality of carriers by default. For example, the 1^{st} bit corresponds to an index of the first carrier.

In this possible implementation, the communication device may jointly feed back, by using one piece of feedback information, a transmission status of uplink data to terminal devices corresponding to a plurality of carriers. This helps reduce feedback overheads.

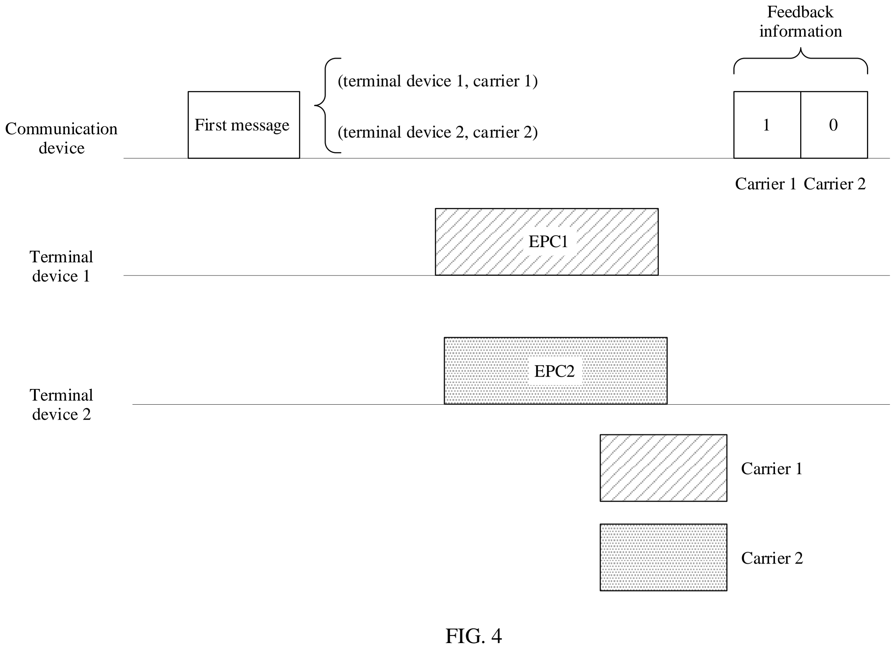

For example, as shown in FIG. 4, the first message indicates the carrier 1 corresponding to the terminal device 1 and the carrier 2 corresponding to the terminal device 2. After receiving the first message, the terminal device 1 sends an EPC 1 to the communication device by using the carrier 1. After receiving the first message, the terminal device 2 sends an EPC2 to the communication device by using the carrier 2. Assuming that the communication device successfully receives the EPC 1 but fails to receive the EPC2, the communication device generates feedback information, where the feedback information includes the second bitmap. The 1^{st} bit in the second bitmap corresponds to the carrier 1, and the 2^{nd} bit in the second bitmap corresponds to the carrier 2. An example in which EPC transmission on a carrier corresponding to a bit whose value is 1 succeeds is used. Because EPC1 transmission succeeds, and EPC2 transmission fails, the second bitmap is 10. The second bitmap indicates that EPC1 transmission on the carrier 1 succeeds, and EPC2 transmission on the carrier 2 fails. The communication device sends the feedback information to the terminal device 1 and the terminal device 2.

In another possible implementation, the communication device may alternatively separately give feedback for uplink data sent by different terminal devices. For example, the communication device may separately give feedback, in the following two manners, for uplink data sent by different terminal devices:
Manner 1: The first terminal device may send uplink data and an identifier of the first terminal device to the communication device by using the first carrier. For example, the identifier of the first terminal device may be a 16-bit random number (random number 16, RN16), or a cell-radio network temporary identifier (cell-radio network temporary identifier, C-RNTI). Correspondingly, the communication device may receive, by using the first carrier, the uplink data and the identifier of the first terminal device that are sent by the first terminal device; and the communication device sends feedback information to the first terminal device, where the feedback information indicates whether the uplink data sent by the first terminal device is successfully transmitted, and the feedback information includes the identifier of the first terminal device or is scrambled by using the identifier of the first terminal device, so that the first terminal device determines whether the feedback information is destined for the first terminal device. Correspondingly, the first terminal device may receive the feedback information.

For example, the terminal device 1 sends the EPC1 and an identifier of the terminal device 1 to the communication device by using the carrier 1. The terminal device 2 sends the EPC2 and an identifier of the terminal device 2 to the communication device by using the carrier 2. The communication device sends feedback information 1 to the terminal device 1, where the feedback information 1 indicates whether the EPC1 is successfully transmitted, and the feedback information 1 includes the identifier of the terminal device 1 or is scrambled by using the identifier of the terminal device 1. The communication device sends feedback information 2 to the terminal device 2, where the feedback information 2 indicates whether the EPC2 is successfully transmitted, and the feedback information 2 includes the identifier of the terminal device 2 or is scrambled by using the identifier of the terminal device 2.

Manner 2: After receiving, by using the first carrier, the uplink data sent by the first terminal device, the communication device sends feedback information to the first terminal device. The feedback information indicates whether the uplink data sent by the first terminal device is successfully transmitted. The feedback information includes indication information indicating the first carrier, for example, includes the index of the first carrier, or the feedback information is carried on the first carrier, so that the first terminal device determines whether the feedback information is destined for the first terminal device.

For example, the terminal device 1 sends the EPC1 to the communication device by using the carrier 1. The terminal device 2 sends the EPC2 to the communication device by using the carrier 2. The communication device sends feedback information 1 to the terminal device 1, where the feedback information 1 indicates whether the EPC 1 is successfully transmitted, and the feedback information 1 includes the index of the carrier 1 or the feedback information 1 is carried on the carrier 1. The communication device sends feedback information 2 to the terminal device 2, where the feedback information 2 indicates whether the EPC2 is successfully transmitted, and the feedback information 2 includes an index of the carrier 2 or the feedback information 2 is carried on the carrier 2.

In a possible implementation, the first carrier corresponds to a plurality of terminal devices, and after transmitting data with the first terminal device by using the first carrier, the communication device may further send a second message. Optionally, the second message may be a QueryRep message, or a name of the second message may be another name. The second message has the following two possible implementations:
Manner 1: The second message is used to trigger, for a plurality of carriers, a next terminal device to transmit data by using a corresponding carrier, and the plurality of carriers include the first carrier. The second message also indicates that communication for a current terminal device ends.

In other words, for different carriers, one same message may be used to trigger a next terminal device to transmit data by using a corresponding carrier. This helps reduce indication overheads. In addition, in this possible implementation, the terminal device may not perform random access, thereby helping save transmission resources.

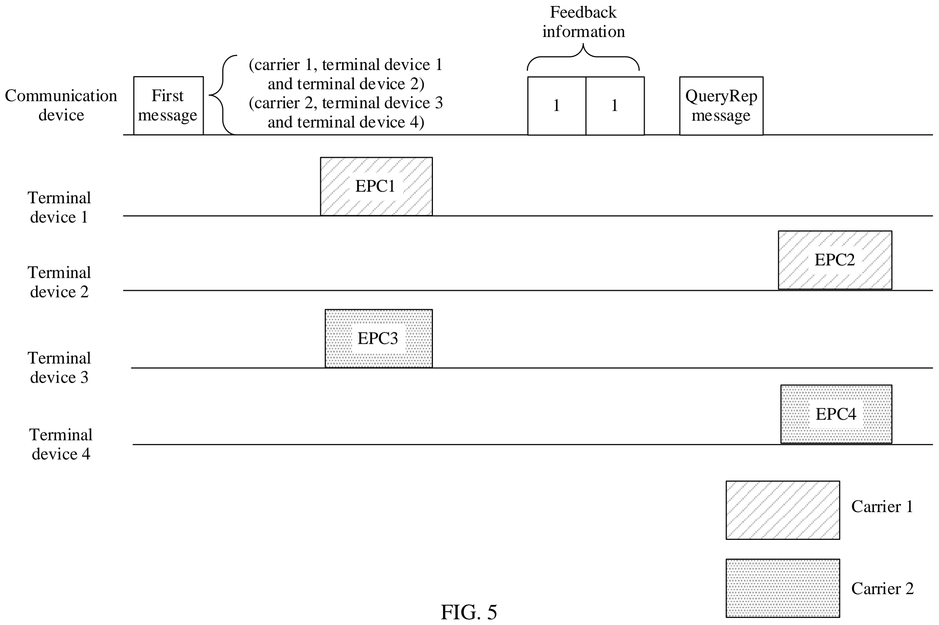

For example, the second message is a QueryRep message. As shown in FIG. 5, the carrier 1 corresponds to the terminal device 1 and the terminal device 2, and the carrier 2 corresponds to the terminal device 3 and the terminal device 4. After the terminal device 1 and the terminal device 3 complete transmission, the communication device sends a QueryRep message. The QueryRep message is used to trigger a next terminal device corresponding to the carrier 1 to transmit data by using the carrier 1, and is used to trigger a next terminal device corresponding to the carrier 2 to transmit data by using the carrier 2. After receiving the QueryRep message, the terminal device 2 transmits data with the communication device by using the carrier 1. After receiving the QueryRep message, the terminal device 4 transmits data with the communication device by using the carrier 2.

Optionally, it may be set that the second message does not carry a carrier index, and the second message is used to trigger, for a plurality of carriers, a next terminal device to transmit data by using a corresponding carrier. This helps reduce indication overheads.

Optionally, the second message includes first information, and a value of the first information is a first candidate value indicating that the second message is applied to a plurality of carriers. The first information has a plurality of candidate values, and different candidate values indicate that a message acts on different carriers. For example, it is assumed that the first candidate value is 00. If the value of the first information is 00, it indicates that the second message acts on a plurality of carriers. If the value of the first information is 01, it indicates that the second message acts on the carrier 1. If the value of the first information is 10, it indicates that the second message acts on the carrier 2. If the value of the first information is 11, it indicates that the second message acts on the carrier 3.

Manner 2: The second message is used to trigger a next terminal device to transmit data by using the first carrier. The second message includes indication information indicating the first carrier, for example, includes the index of the first carrier. Alternatively, the second message is carried on the first carrier, so that the terminal device distinguishes a carrier on which the second message acts. The second message also indicates that communication for a current terminal device ends.

In other words, for different carriers, different messages are used to trigger a next terminal device corresponding to the carriers to perform data transmission. In this way, the next terminal device corresponding to the different carriers can be more flexibly triggered to perform data transmission. In addition, in this possible implementation, the terminal device may not perform random access, thereby helping save transmission resources.

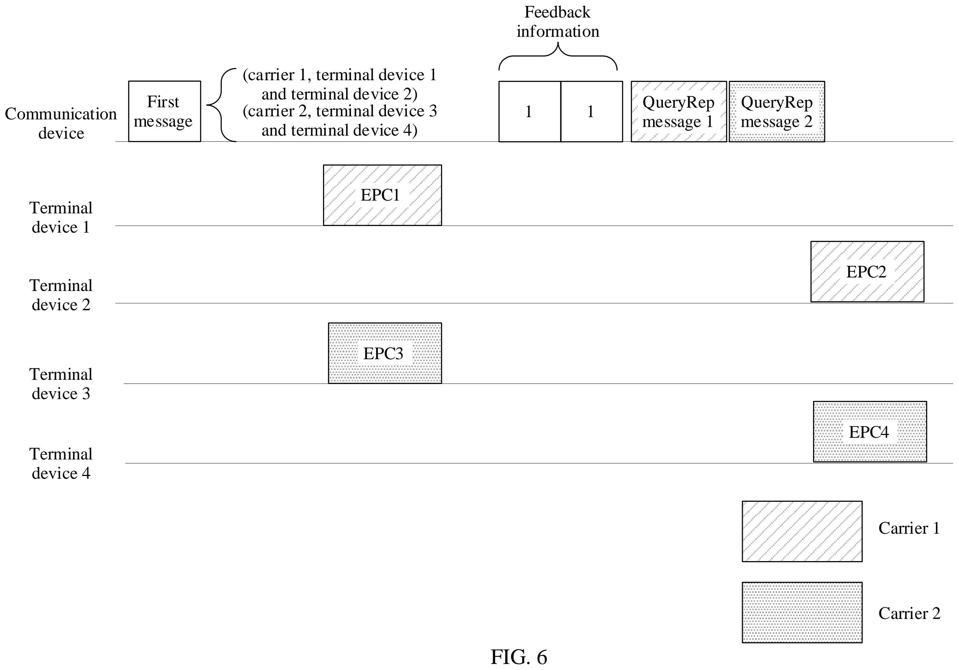

For example, the second message is a QueryRep message. As shown in FIG. 6, the carrier 1 corresponds to the terminal device 1 and the terminal device 2, and the carrier 2 corresponds to the terminal device 3 and the terminal device 4. After the terminal device 1 completes transmission, the communication device may send a QueryRep message 1 on the carrier 1. The QueryRep message 1 is used to trigger a next terminal device corresponding to the carrier 1 to transmit data by using the carrier 1. After receiving the QueryRep message 1, the terminal device 2 transmits data with the communication device by using the carrier 1. After the terminal device 3 completes transmission, the communication device may send a QueryRep message 2 on the carrier 2. The QueryRep message 2 is used to trigger a next terminal device corresponding to the carrier 2 to transmit data by using the carrier 2. After receiving the QueryRep message 2, the terminal device 4 transmits data with the communication device by using the carrier 2.

Alternatively, the QueryRep message 1 is not necessarily sent on the carrier 1, and the QueryRep message 2 is not necessarily sent on the carrier 2. The QueryRep message 1 may carry the index of the carrier 1, and the QueryRep message 2 may carry the index of the carrier 2, so that the terminal device distinguishes a carrier on which the QueryRep message acts.

In a possible implementation, before transmitting data with the communication device by using the first carrier, the first terminal device may further send a random number (for example, RN16) to the communication device by using the first carrier, to perform random access. Correspondingly, the communication device may receive, by using the first carrier, the random number sent by the first terminal device, and send feedback information to the first terminal device, where the feedback information indicates that the random number sent by the first terminal device is successfully transmitted. Optionally, the feedback information may carry some or all content of random access initiated by the first terminal device. For example, the feedback information may carry the random number sent by the first terminal device.

A transmission status of a random number can be jointly fed back to terminal devices corresponding to a plurality of carriers by using one piece of feedback information. This helps reduce feedback overheads. Alternatively, the communication device may separately give feedback for random numbers sent by different terminal devices. A manner in which the communication device gives feedback for the random number is similar to a manner in which the communication device gives feedback for uplink data. For details, refer to the description of the manner of giving feedback for the uplink data by the communication device. Details are not described herein again.

In a possible implementation, the communication device may further send a third message, where the third message is used to trigger random access or next random access on a plurality of carriers, and the plurality of carriers include the first carrier. For example, the third message may be a Query message, a QueryRep message, or another message name. Correspondingly, the first terminal device may receive the third message, and after receiving the third message, send a random number to the communication device by using the first carrier. In other words, for different carriers, random access on the carriers or next random access on the carriers may be triggered by using one same message. This helps reduce indication overheads.

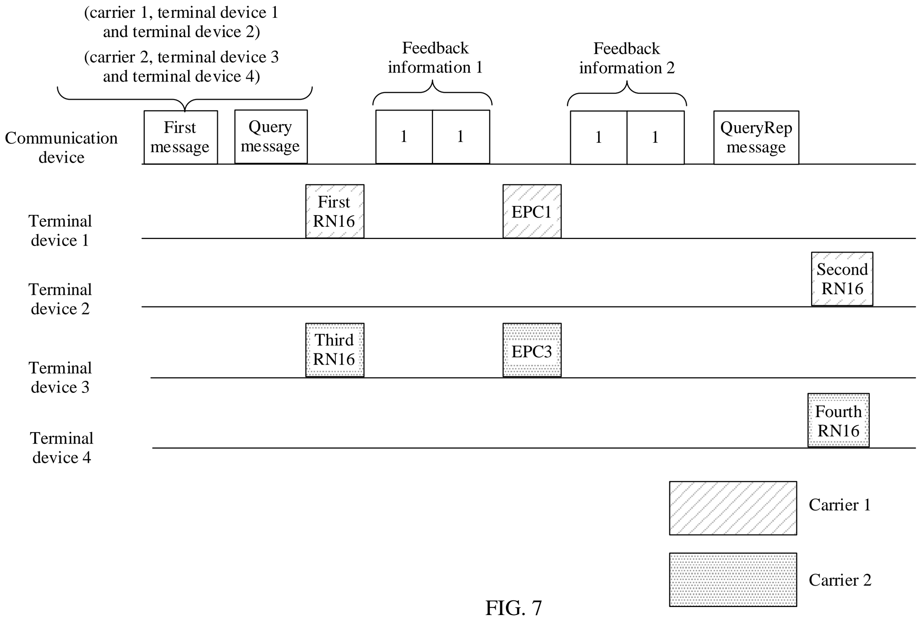

For example, the Query message triggers random access on a plurality of carriers, and the QueryRep message triggers next random access on the plurality of carriers. As shown in FIG. 7, after sending the first message, the communication device sends a Query message, to trigger terminal devices on the carrier 1 and the carrier 2 to perform random access. After the terminal device 1 and the terminal device 3 receive the Query message, the terminal device 1 sends first RN16 to the communication device by using the carrier 1, and the terminal device 3 sends third RN16 to the communication device by using the carrier 2. After receiving the first RN16 and the third RN16, the communication device sends feedback information 1, where the feedback information 1 carries an indication that the first RN16 and the third RN16 are successfully transmitted.

After receiving the feedback information 1, the terminal device 1 sends the EPC1 by using the carrier 1. After receiving the feedback information 1, the terminal device 3 sends the EPC3 by using the carrier 2. After receiving the EPC 1 and the EPC3, the communication device sends feedback information 2, to indicate that the EPC1 and the EPC3 are successfully transmitted. After sending the feedback information 2, the communication device sends a QueryRep message, to trigger next random access on the carrier 1 and the carrier 2. After receiving the QueryRep message, the terminal device 2 performs random access on the carrier 1. After receiving the QueryRep message, the terminal device 4 performs random access on the carrier 2.

Optionally, it may be set that the third message does not carry a carrier index, and the third message is used to trigger next random access on a plurality of carriers. This helps reduce indication overheads.

Optionally, the third message includes second information, and a value of the second information is a second candidate value indicating that the third message is applied to a plurality of carriers. The second information has a plurality of candidate values, and different candidate values indicate that a message acts on different carriers.

In another possible implementation, the third message is used to trigger random access or trigger next random access on the first carrier; and the third message includes indication information indicating the first carrier, for example, includes the index of the first carrier; or the third message is carried on the first carrier. In other words, the communication device may separately send a plurality of messages for different carriers to trigger random access or trigger next random access on the different carriers.

For example, the Query message triggers random access on a carrier, and the QueryRep message triggers next random access on the carrier. The carrier 1 corresponds to the terminal device 1 and the terminal device 2, and the carrier 2 corresponds to the terminal device 3 and the terminal device 4. After sending the first message, the communication device sends a Query message 1, to trigger the terminal device 1 corresponding to the carrier 1 to perform random access. The communication device sends a Query message 2, to trigger the terminal device 3 corresponding to the carrier 2 to perform random access. After the terminal device 1 completes transmission, the communication device sends the QueryRep message 1, to trigger next random access on the carrier 1. After the terminal device 3 completes transmission, the communication device sends the QueryRep message 2, to trigger next random access on the carrier 2. The Query message 1 and the QueryRep message 1 may carry the index of the carrier 1. The Query message 2 and the QueryRep message 2 may carry the index of the carrier 2. Alternatively, the Query message 1 and the QueryRep message 1 are sent on the carrier 1. The Query message 2 and the QueryRep message 2 are transmitted on the carrier 2.

In a possible implementation, after receiving the first message, the terminal device may directly perform data transmission without performing random access or conflict resolution. This helps save transmission resources.

In a possible implementation, transmission progresses of a plurality of terminal devices that are performing transmission on different carriers are the same. In a possible example, that transmission progresses of a plurality of terminal devices that are performing transmission on different carriers are the same may be understood as that information transmitted by a plurality of terminal devices that are performing transmission on different carriers is information of a same type. For example, a plurality of terminal devices that are performing transmission on different carriers are all in a random access procedure, and are all receiving or sending a message of a same type, for example, all are sending an access request, and have not received an access response. It may be understood that, that the plurality of terminal devices are all performing receiving or sending may start receiving or sending at different time points, or may end receiving or sending at different time points. In other words, that the plurality of terminal devices simultaneously start or end transmission is not limited in this application. Alternatively, that transmission progresses of a plurality of terminal devices that are performing transmission on different carriers are the same may be understood as that a plurality of terminal devices that are performing transmission on different carriers are in a phase of transmitting information of a same type.

It may be understood that transmission (communicate) in this application may be sending, or may be receiving.

For example, as shown in FIG. 7, when the terminal device 1 is performing random access, the terminal device 3 is also performing random access. When the terminal device 1 is transmitting the EPC, the terminal device 3 is also transmitting the EPC. When the terminal device 2 is performing random access, the terminal device 4 is also performing random access. When the terminal device 2 is transmitting the EPC, the terminal device 4 is also transmitting the EPC.

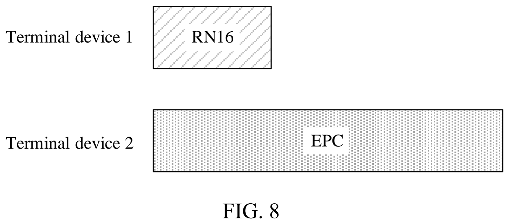

If transmission progresses of a plurality of terminal devices that are performing transmission on different carriers are different, an uplink resource waste may be caused. For example, as shown in FIG. 8, the terminal device 1 sends a random number (for example, RN16) on the carrier 1 to perform random access. In this case, the terminal device 2 has successfully performed random access, and sends the EPC on the carrier 2. Generally, time for sending a random number is relatively short, and time for sending an EPC is relatively long. It is assumed that both the terminal device 1 and the terminal device 2 are passive tags, and downlink is single-carrier transmission (for a pure passive tag, narrowband filtering is not supported, and a plurality of carriers cannot be distinguished in downlink). Uplink transmission performed by the terminal device 1 and the terminal device 2 depends on a carrier sent by the communication device. Therefore, the communication device can send downlink signaling only after the terminal device 2 completes EPC sending. In this way, after completing sending of the random number, the terminal device 1 needs to wait for the terminal device 2 to complete EPC transmission before receiving downlink data. Therefore, an uplink resource waste exists. Transmission progresses of a plurality of terminal devices that are performing transmission on different carriers are enabled to be the same. This helps avoid a large difference between information transmission duration of the plurality of terminal devices that are performing transmission, thereby helping avoid an uplink resource waste.

In a possible implementation, if a terminal device corresponding to the first carrier succeeds in random access and a terminal device corresponding to the second carrier fails in random access in a same random access slot, next random access on the second carrier is triggered after the terminal device that succeeds in random access and that corresponds to the first carrier completes data transmission. To be specific, after the terminal on the second carrier fails to perform random access, the communication device does not immediately trigger next slot arrival or next terminal access on the terminal on the second carrier, but waits until the terminal on the first carrier completes data transmission, and then triggers next terminal access or next slot arrival on the two carriers. The communication device may send two trigger indications together or send one piece of signaling to simultaneously trigger next terminal access or next slot arrival on two carriers. Based on this possible implementation, transmission progresses of a plurality of terminal devices that are performing transmission on different carriers are enabled to be the same, thereby avoiding an uplink resource waste.

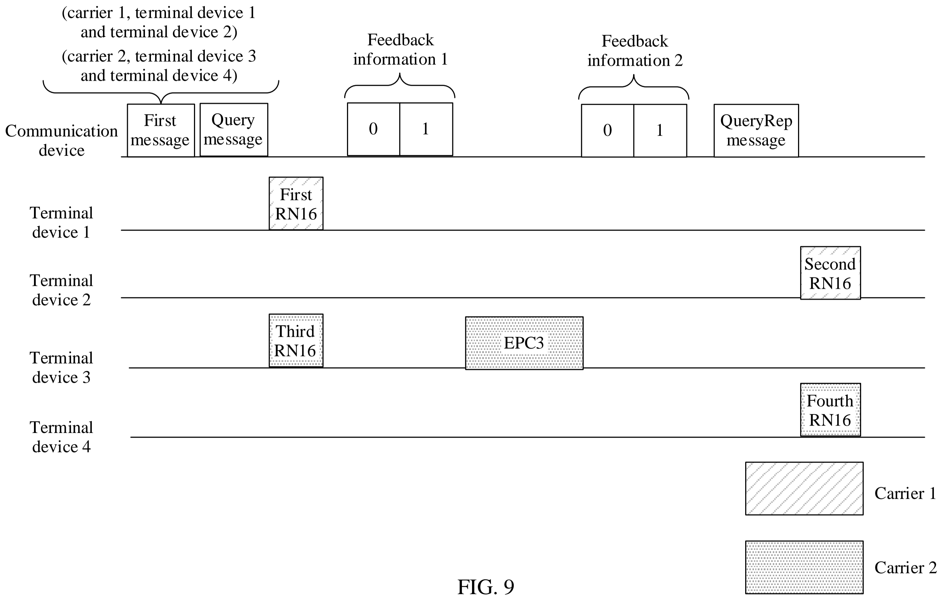

For example, as shown in FIG. 9, if the first RN16 sent by the terminal device 1 by using the carrier 1 fails to be transmitted, the communication device does not immediately send a QueryRep message to trigger next random access on the carrier 1. After the terminal device 3 completes transmission of the EPC3, the communication device sends the QueryRep message to trigger next random access on the carrier 1 and the carrier 2. In this way, a case in which transmission progresses of a plurality of terminal devices are inconsistent does not occur.

In a possible implementation, if data transmission with the first terminal device by using the first carrier fails, retransmission scheduling is not performed for data transmitted by the first terminal device. Based on this possible implementation, transmission progresses of a plurality of terminal devices that are performing transmission on different carriers are enabled to be the same, thereby avoiding an uplink resource waste.

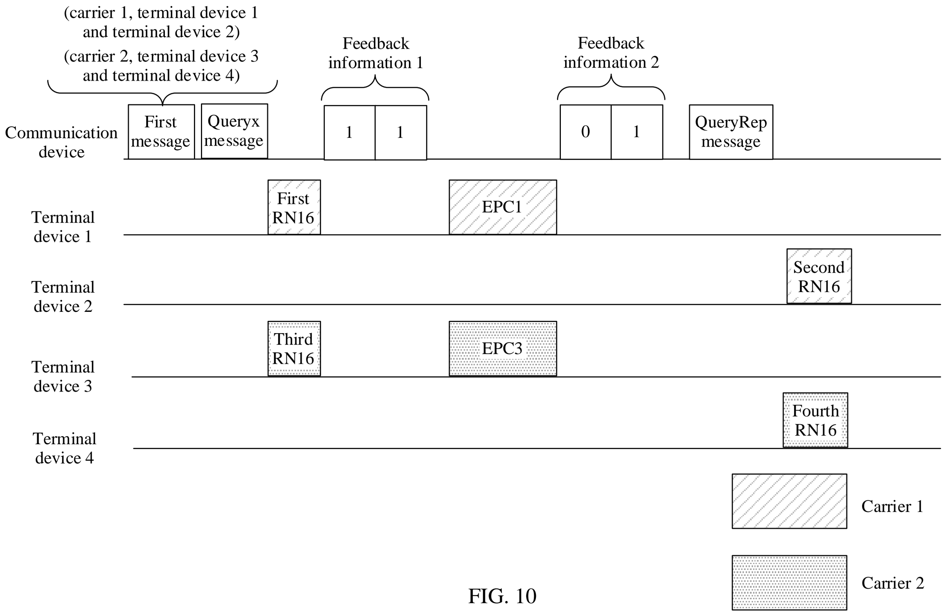

For example, as shown in FIG. 10, even if EPC1 transmission fails, the communication device does not perform retransmission scheduling for the EPC1. In this way, a case in which transmission progresses of a plurality of terminal devices are inconsistent does not occur. For a terminal device that fails to send an EPC, the communication device may trigger the terminal device to perform random access again in a subsequent inventory procedure.

In a possible implementation, the carrier in this embodiment of this application may also be replaced with a process.

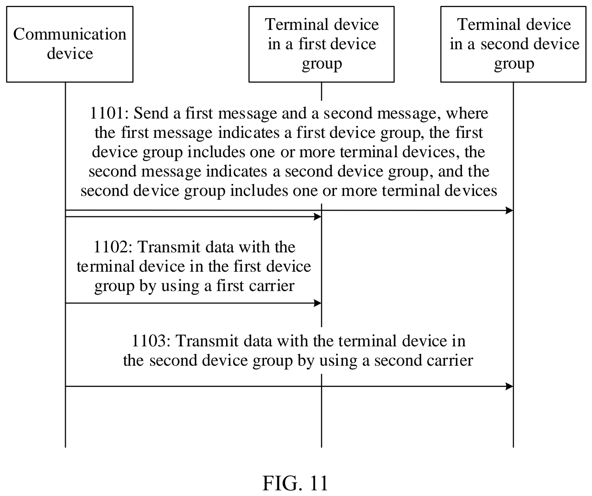

FIG. 11 is a flowchart of a data transmission method according to an embodiment of this application. The data transmission method includes steps 1101 to 1103. The method shown in FIG. 11 may be performed by a communication device and a terminal device, or may be performed by a chip in the communication device and a chip in the terminal device. Alternatively, the method shown in FIG. 11 may be performed by another type of product, and a person skilled in the art may make further extension according to the content disclosed in the specification. An example in which the method shown in FIG. 11 is performed by the communication device and the terminal device is used.

1101: The communication device sends a first message and a second message, where the first message indicates a first device group, the first device group includes one or more terminal devices, the second message indicates a second device group, and the second device group includes one or more terminal devices.

1102: The communication device transmits data with the terminal device in the first device group by using a first carrier.

1103: The communication device transmits data with the terminal device in the second device group by using a second carrier.

Correspondingly, a terminal device within a communication range of the communication device may receive the first message and the second message. A first terminal device is used as an example. The first terminal device is any terminal device within the communication range of the communication device. After the first terminal device receives the first message and the second message, if the first terminal device belongs to the terminal device in the first device group, the first terminal device transmits data with the communication device by using the first carrier; or if the first terminal device belongs to the terminal device in the second device group, the first terminal device transmits data with the communication device by using the second carrier. Optionally, the data may be uplink data or downlink data. For example, the uplink data may be an EPC or other data. Optionally, the data transmitted between the first terminal device and the communication device may be carried in a NAS message, or may be transmitted by using a user plane, for example, a PDCP packet, an RLC packet, or a MAC packet is transmitted.

If the first terminal device is an active tag (or a device type C), the first terminal device may autonomously generate a corresponding carrier to send data. If the first terminal device is a passive tag (or a device type A), because the passive tag performs backscattering on a carrier sent by a reader to send data, if a carrier that the first terminal device needs to send is different from a carrier sent by the communication device, the first terminal device needs to perform frequency shift.

Optionally, the first message and the second message are paging messages or select instructions. Alternatively, names of the first message and the second message may be other names. This is not limited in this embodiment of this application.

Optionally, the first message may carry one piece of the following information to indicate the first device group: an identifier of a device in the first device group, an identifier of the first device group, a selection condition used to select the first device group, and a character string used to determine the first device group. Optionally, the identifier of the device in the first device group may be an identifier allocated by a core network, a SIM card identifier, an application layer identifier, a newly defined identifier (an operator identifier (PLMN ID) + an enterprise identifier + a product electronic identifier (for example, an EPC)), an identifier stored in a storage area, or a pre-written identifier allocated by an operator or product identifier. Optionally, the selection condition used to select the first device group may be carried in a NAS message or an RRC message or a NAS message included in RRC.

Similarly, the second message may also carry one piece of the following information to indicate the second device group: an identifier of a device in the second device group, an identifier of the second device group, a selection condition used to select the second device group, and a character string used to determine the second device group. Optionally, the identifier of the device in the second device group may be an identifier allocated by a core network, a SIM card identifier or an application layer identifier, a newly defined identifier (an operator identifier (PLMN ID) + an enterprise identifier + a product electronic identifier (for example, an EPC)), an identifier stored in a storage area, or a pre-written identifier allocated by an operator or product identifier. Optionally, the selection condition used to select the second device group may be carried in a NAS message or an RRC message or a NAS message included in RRC. For descriptions of the identifier allocated by the core network, the SIM card identifier, or the application layer identifier, refer to the foregoing descriptions. Details are not described herein again.

In a possible implementation, the first message further includes first indication information, the second message further includes second indication information, the first indication information indicates the first carrier, and the second indication information indicates the second carrier. Because the communication apparatus knows a load status of each carrier, based on this possible implementation, the communication device can properly configure a corresponding carrier for each device group, which helps improve system performance.

Optionally, the first indication information may indicate the first carrier by indicating a frequency or an index of the first carrier, and the second indication information may indicate the second carrier by indicating a frequency or an index of the second carrier. Optionally, the first indication information may indicate the first carrier by indicating a shift frequency corresponding to the first carrier, and the second indication information may indicate the second carrier by indicating a shift frequency corresponding to the second carrier. For example, the first indication information indicates that no frequency shift corresponds to the first carrier, and the second indication information indicates that shift by one RB leftward or rightward corresponds to the second carrier.

Optionally, to ensure that the communication device can perform differentiated processing on terminal devices of different services or transmit terminal devices of different services back to a network, in a multi-service communication procedure, a multi-inventory procedure, or a multi-paging procedure, the communication device may indicate the terminal device in the first device group and the terminal device in the second device group to shift to different carriers, and the communication device does not indicate the terminal device in the first device group and the terminal device in the second device group to shift to a same carrier. For example, when the terminal device in the second device group performs transmission on the second carrier, the communication device does not indicate the terminal device in the first device group to shift to the second carrier for transmission.

Optionally, to ensure that the communication device can perform differentiated processing or backhaul network for terminal devices of different services, in a multi-service communication procedure, a multi-inventory procedure, or a multi-paging procedure, the communication device may not indicate the terminal device in the first device group and the terminal device in the second device group to perform frequency shift.

Optionally, the service in this specification may also be referred to as an inventory service, and the service may also be defined as a process in which a network triggers at least one terminal device to access a network or report an identifier.

Optionally, for a tag type (for example, a passive tag), the first message and the second message may be sent on a same downlink carrier, and tags in different device groups may separately send uplink data on the first carrier and the second carrier.

Optionally, the communication device may send data on different carriers together to a core network based on a carrier granularity.

Optionally, the carrier in this embodiment of this application may also be replaced with a process.

Optionally, the first indication information may further indicate both the first carrier and a first process. The second indication information may further indicate both the second carrier and a second process.

In another possible implementation, the first message may not include the first indication information, and the second message may not include the first indication information. The first message may be carried on the first carrier, and the second message may be carried on the second carrier. If the terminal device in the first device group receives the first message on the first carrier, the terminal device transmits data with the communication device by using the first carrier. If the terminal device in the second device group receives the second message on the second carrier, the terminal device transmits data with the communication device by using the second carrier. Based on this possible implementation, signaling overheads for indicating a carrier are reduced.

In still another possible implementation, the first message may not include the first indication information, and the second message may not include the first indication information. Both the first message and the second message may carry indication information indicating multicarrier transmission. Optionally, both the first message and the second message may indicate a plurality of frequency locations, or indicate one frequency range. After receiving the first message, the terminal device in the first device group may randomly select one carrier from the plurality of frequency locations or the frequency range indicated by the first message as the first carrier, and transmit data with the communication device by using the first carrier. After receiving the second message, the terminal device in the second device group may randomly select one carrier from the plurality of frequency locations or the frequency range indicated by the second message as the second carrier, and transmit data with the communication device by using the second carrier. Alternatively, after receiving the first message, the terminal device in the first device group may select, according to a preset rule, one carrier from the plurality of frequency locations or the frequency range indicated by the first message as the first carrier, and transmit data with the communication device by using the first carrier. After receiving the second message, the terminal device in the second device group may select, according to a preset rule, one carrier from the plurality of frequency locations or the frequency range indicated by the second message as the second carrier, and transmit data with the communication device by using the second carrier.

Optionally, the first device group and the second device group may transmit different services, so that the communication device transmits back data of different services to a core network or an application layer.

Optionally, scheduling technologies of different QoS may be used for terminal devices in different groups, to distinguish between different services.

It can be learned that according to the method described in FIG. 11, a plurality of device groups may perform transmission by using different carriers, and not all device groups perform transmission by using a same carrier. This helps improve transmission flexibility and improve system performance.

In a possible implementation, the second message is transmitted before all or some devices in the first device group complete transmission. In this way, different device groups may perform transmission with the communication device on different carriers at the same time. In this way, concurrent transmission between a plurality of users and the communication device can be implemented, thereby helping increase a system capacity.

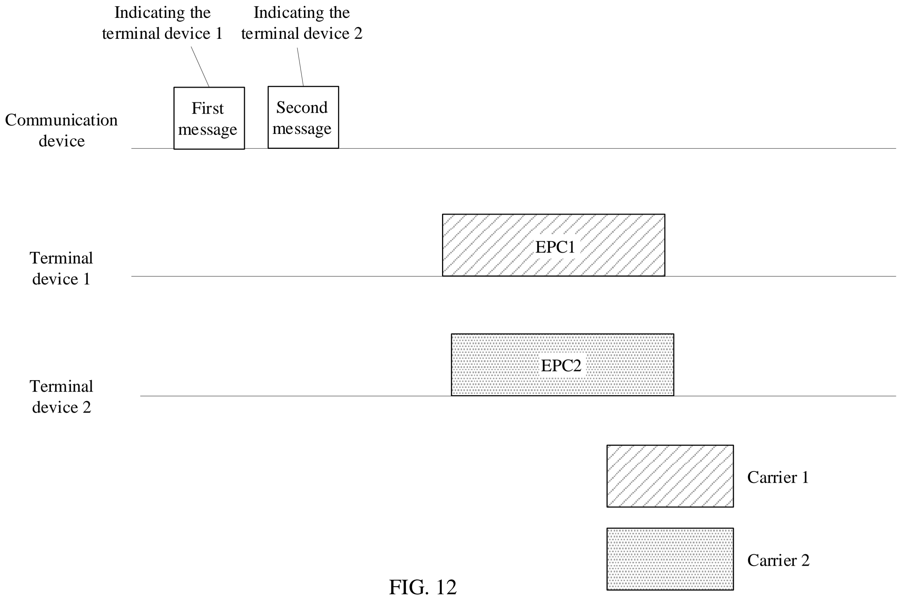

For example, as shown in FIG. 12, it is assumed that the first device group includes a terminal device 1, and the second device group includes a terminal device 2. The communication device continuously sends the first message and the second message. After receiving the first message, the terminal device 1 sends an EPC1 to the communication device on a carrier 1. After receiving the second message, the terminal device 2 sends an EPC2 to the communication device on a carrier 2.

In a possible implementation, after receiving, by using the first carrier, uplink data sent by the terminal device in the first device group, and receiving, by using the second carrier, uplink data sent by the terminal device in the second device group, the communication device may further send first feedback information, where the first feedback information indicates whether uplink data on M carriers is successfully transmitted, the M carriers include the first carrier and the second carrier, and M is an integer greater than 1; the first feedback information includes a first bitmap, the first bitmap includes M bits, and the M bits are in a one-to-one correspondence with the M carriers; and a value of a first bit indicates whether uplink data on a carrier corresponding to the first bit is successfully transmitted, and the first bit is any bit in the first bitmap. Correspondingly, the terminal device in the first device group and the terminal device in the second device group may receive the first feedback information.

Optionally, each of the M bits may be associated with one carrier index or identification information of one terminal device, for example, a temporary identifier, to enable the M bits to correspond to terminal devices of a plurality of carriers.

Optionally, the M bits may be associated with a plurality of carriers by default. For example, the 1^{st} bit corresponds to an index of the first carrier.

In this possible implementation, the communication device may jointly feed back a transmission status of uplink data to terminal devices in a plurality of terminal device groups by using one piece of feedback information. This helps reduce feedback overheads.

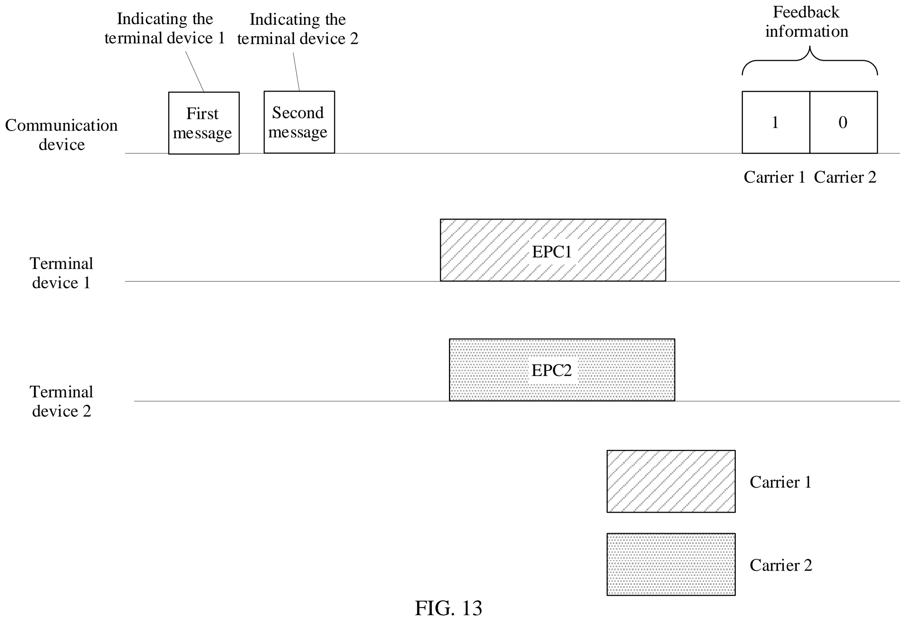

For example, as shown in FIG. 13, assuming that the communication device successfully receives the EPC1 sent on the carrier 1, but fails to receive the EPC2 sent on the carrier 2, the communication device generates feedback information, where the feedback information includes a first bitmap. The 1^{st} bit in the first bitmap corresponds to the carrier 1, and the 2^{nd} bit in the first bitmap corresponds to the carrier 2. An example in which EPC transmission on a carrier corresponding to a bit whose value is 1 succeeds is used. Because EPC1 transmission succeeds, and EPC2 transmission fails, the first bitmap is 10. The first bitmap indicates that EPC1 transmission on the carrier 1 succeeds, and EPC2 transmission on the carrier 2 fails. The communication device sends the feedback information to the terminal device 1 and the terminal device 2.

In another possible implementation, the communication device may alternatively separately give feedback for uplink data sent by terminal devices in different device groups. For example, the communication device may separately give feedback, in the following two manners, for uplink data sent by terminal devices in different device groups.

Manner 1: The terminal device in the first device group may send uplink data and an identifier of the terminal device in the first device group to the communication device by using the first carrier. For example, the identifier of the terminal device in the first device group may be RN16 or a C-RNTI. Correspondingly, the communication device may receive, by using the first carrier, the uplink data and the identifier of the first terminal device that are sent by the terminal device in the first device group; and the communication device sends feedback information 1 to the terminal device in the first device group, where the feedback information 1 indicates whether the uplink data sent by the terminal device in the first device group is successfully transmitted, and the feedback information 1 includes the identifier of the terminal device in the first device group or is scrambled by using the identifier of the terminal device in the first device group, so that the terminal device in the first device group determines whether the feedback information is destined for the terminal device in the first device group. Correspondingly, the terminal device in the first device group may receive the feedback information 1.

Similarly, the terminal device in the second device group may send uplink data and an identifier of the terminal device in the second device group to the communication device by using the second carrier. The communication device may receive, by using the second carrier, the uplink data and the identifier of the second terminal device that are sent by the terminal device in the second device group. The communication device sends feedback information 2 to the terminal device in the second device group, where the feedback information 2 indicates whether the uplink data sent by the terminal device in the second device group is successfully transmitted, and the feedback information 2 includes the identifier of the terminal device in the second device group or is scrambled by using the identifier of the terminal device in the second device group, so that the terminal device in the first device group determines whether the feedback information is destined for the terminal device in the second device group. Correspondingly, the terminal device in the second device group may receive the feedback information 2.

Manner 2: After receiving, by using the first carrier, the uplink data sent by the terminal device in the first device group, the communication device sends feedback information 1 to the terminal device in the first device group. The feedback information 1 indicates whether the uplink data sent by the terminal device in the first device group is successfully transmitted. The feedback information 1 includes indication information indicating the first carrier, for example, includes the index of the first carrier, or is carried on the first carrier, so that the terminal device in the first device group determines whether the feedback information is destined for the terminal device in the first device group.

Similarly, after receiving, by using the second carrier, the uplink data sent by the terminal device in the second device group, the communication device sends feedback information 2 to the terminal device in the second device group. The feedback information 2 indicates whether the uplink data sent by the terminal device in the second device group is successfully transmitted. The feedback information 2 includes indication information indicating the second carrier, for example, includes the index of the second carrier, or is carried on the second carrier, so that the terminal device in the second device group determines whether the feedback information is destined for the terminal device in the second device group.

In a possible implementation, before the terminal device in the first device group transmits data with the communication device by using the first carrier, the terminal device in the first device group may further send a first random number to the communication device by using the first carrier; and before the terminal device in the second device group transmits data with the communication device by using the second carrier, the terminal device in the second device group may further send a second random number to the communication device by using the second carrier. Correspondingly, the communication device may receive, by using the first carrier, the first random number sent by the terminal device in the first device, and may receive, by using the second carrier, the second random number sent by the terminal device in the second device group. The communication device may further send second feedback information and third feedback information, where the second feedback information indicates that the first random number is successfully transmitted, and the third feedback information indicates that the second random number is successfully transmitted. Correspondingly, the terminal device in the first device group may receive the second feedback information. The terminal device in the second device group may receive the third feedback information. Alternatively, the communication device may send fourth feedback information, where the fourth feedback information indicates that the first random number and the second random number are successfully transmitted. Correspondingly, the terminal device in the first device group and the terminal device in the second device group may receive the fourth feedback information.

In other words, the communication device may separately give feedback for random numbers sent by different terminal devices. In this way, feedback for the random numbers can be given more flexibly. Alternatively, the communication device may jointly feed back a transmission status of a random number to terminal devices corresponding to a plurality of carriers by using one piece of feedback information. This helps reduce feedback overheads. Alternatively, a manner in which the communication device gives feedback for the random number is similar to a manner in which the communication device gives feedback for uplink data. That is, for details, refer to the description of the manner of giving feedback for the uplink data by the communication device. Details are not described herein again.

In a possible implementation, the communication device may further send a third message, where the third message is used to trigger random access or trigger next random access on the first carrier and the second carrier. Optionally, the third message may be a Query message, a QueryRep message, or another message name. Correspondingly, the terminal device in the first device group and the terminal device in the second device group may receive the third message. After receiving the third message, the terminal device in the first device group sends the first random number to the communication device by using the first carrier. After receiving the third message, the terminal device in the second device group sends the second random number to the communication device by using the second carrier. In other words, for different carriers, random access on the carriers or next random access on the carriers may be triggered by using one same message. This helps reduce indication overheads.

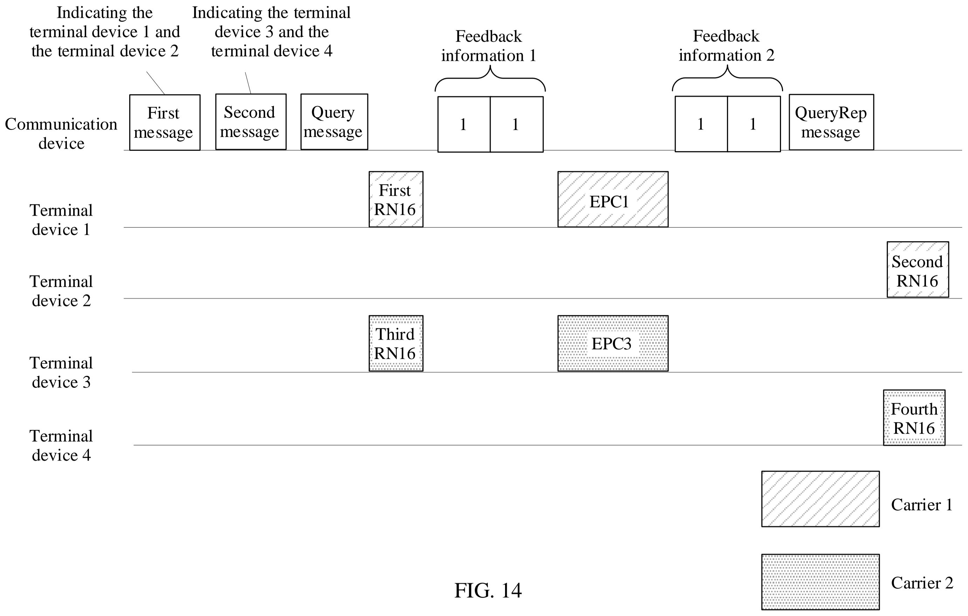

For example, the Query message triggers random access on the first carrier and the second carrier, and the QueryRep message triggers next random access on the first carrier and the second carrier. As shown in FIG. 14, the communication device sends a first message and a second message. The first message indicates the terminal device 1 and the terminal device 2, and the second message indicates the terminal device 3 and the terminal device 4. After sending the first message and the second message, the communication device sends a Query message, to trigger the terminal devices on the carrier 1 and the carrier 2 to perform random access. After the terminal device 1 and the terminal device 3 complete transmission, the communication device sends a QueryRep message, to trigger next random access on the carrier 1 and the carrier 2. After receiving the QueryRep message, the terminal device 2 performs random access on the carrier 1. After receiving the QueryRep message, the terminal device 4 performs random access on the carrier 2.

Optionally, it may be set that the third message does not carry a carrier index, and the third message is used to trigger next random access on a plurality of carriers. This helps reduce indication overheads.

Optionally, the third message includes first information, and a value of the first information is a first candidate value indicating that the third message is applied to a plurality of carriers. The first information has a plurality of candidate values, and different candidate values indicate that a message acts on different carriers.

In another possible implementation, the communication device may further send a fourth message, where the fourth message is used to trigger random access or trigger next random access on the first carrier, and the fourth message includes indication information indicating the first carrier, for example, includes the index of the first carrier; or the fourth message is carried on the first carrier. The communication device may further send a fifth message, where the fifth message is used to trigger random access or trigger next random access on the second carrier, and the fifth message includes indication information indicating the second carrier, for example, includes the index of the second carrier; or the fifth message is carried on the second carrier. The fourth message and the fifth message may be Query messages, QueryRep messages, or other message names. In other words, the communication device may separately send a plurality of messages for different carriers to trigger random access or trigger next random access on the different carriers.

For example, the first message indicates the terminal device 1 and the terminal device 2, and the second message indicates the terminal device 3 and the terminal device 4. After sending the first message, the communication device sends a Query message 1, to trigger the terminal device 1 to perform random access on the carrier 1. After the communication device sends the second message, the communication device sends a Query message 2, to trigger the terminal device 3 to perform random access on the carrier 2. After the terminal device 1 completes transmission, the communication device sends the QueryRep message 1, to trigger next random access on the carrier 1. After the terminal device 3 completes transmission, the communication device sends the QueryRep message 2, to trigger next random access on the carrier 2. The Query message 1 and the QueryRep message 1 may carry the index of the carrier 1. The Query message 2 and the QueryRep message 2 may carry the index of the carrier 2. Alternatively, the Query message 1 and the QueryRep message 1 are sent on the carrier 1. The Query message 2 and the QueryRep message 2 are transmitted on the carrier 2.

In a possible implementation, after receiving the first message, the terminal device in the first device group may directly perform data transmission without performing random access or conflict resolution. After receiving the second message, the terminal device in the second device group may directly perform data transmission without performing random access or conflict resolution. In this way, transmission resources can be saved.

In a possible implementation, after the communication device completes data transmission with one terminal device in the first device group by using the first carrier, and after the communication device completes data transmission with one terminal device in the second device group by using the second carrier, the communication device may further send a sixth message. The sixth message is used to trigger, on the first carrier and the second carrier, a next terminal device to transmit data with the communication device. Optionally, the sixth message may be a QueryRep message or another message name.

In other words, for different carriers, one same message may be used to trigger a next terminal device to transmit data by using a corresponding carrier. This helps reduce indication overheads. In addition, in this possible implementation, the terminal device may not perform random access, thereby helping save transmission resources.

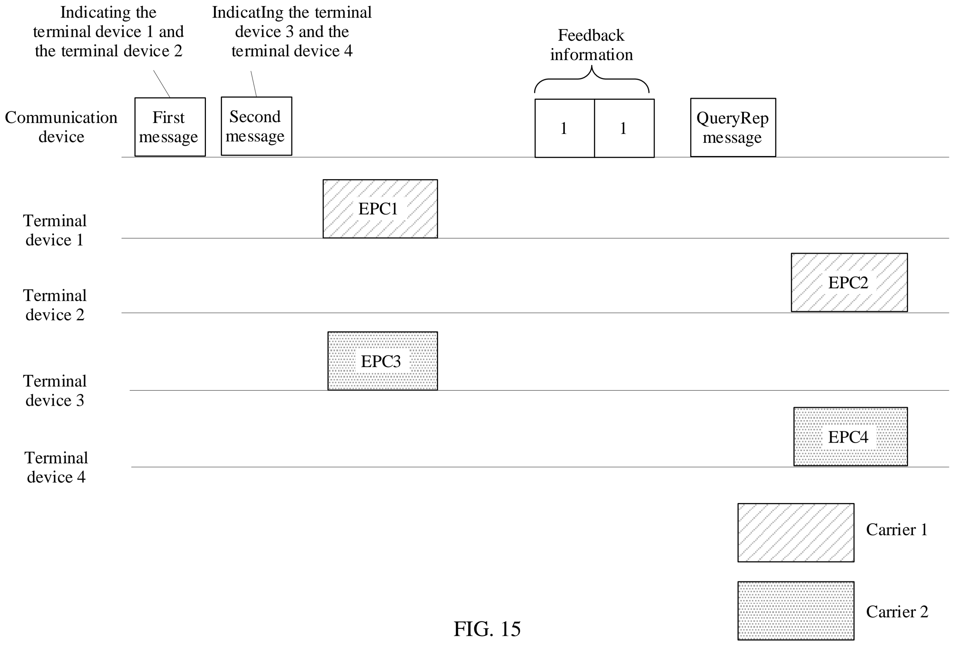

For example, as shown in FIG. 15, the first device group includes the terminal device 1 and the terminal device 2, and the second device group includes the terminal device 3 and the terminal device 4. The terminal device in the first device group transmits data with the communication device by using the carrier 1. The terminal device in the second device group transmits data with the communication device by using the carrier 2. After the terminal device 1 and the terminal device 3 complete transmission, the communication device sends a QueryRep message. The QueryRep message is used to trigger a next terminal device corresponding to the carrier 1 to transmit data by using the carrier 1, and is used to trigger a next terminal device corresponding to the carrier 2 to transmit data by using the carrier 2. After receiving the QueryRep message, the terminal device 2 transmits data with the communication device by using the carrier 1. After receiving the QueryRep message, the terminal device 4 transmits data with the communication device by using the carrier 2.

In a possible implementation, after completing data transmission with one terminal device in the first device group by using the first carrier, the communication device may further send a seventh message. The seventh message is used to trigger, on the first carrier, a next terminal device to transmit data with the communication device. After completing data transmission with one terminal device in the second device group by using the second carrier, the communication device may further send an eighth message. The eighth message is used to trigger, on the second carrier, a next terminal device to transmit data with the communication device. Optionally, the seventh message includes indication information indicating the first carrier, for example, includes the index of the second carrier; or the seventh message is carried on the first carrier, and the eighth message includes indication information indicating the second carrier, for example, includes the index of the second carrier; or the eighth message is carried on the second carrier, so that the terminal device distinguishes a carrier on which a message acts. The seventh message and the eighth message may be QueryRep messages or other message names.

In other words, for different carriers, different messages are used to trigger a next terminal device corresponding to the carriers to perform data transmission. In this way, the next terminal device corresponding to the different carriers can be more flexibly triggered to perform data transmission. In addition, in this possible implementation, the terminal device may not perform random access, thereby helping save transmission resources.

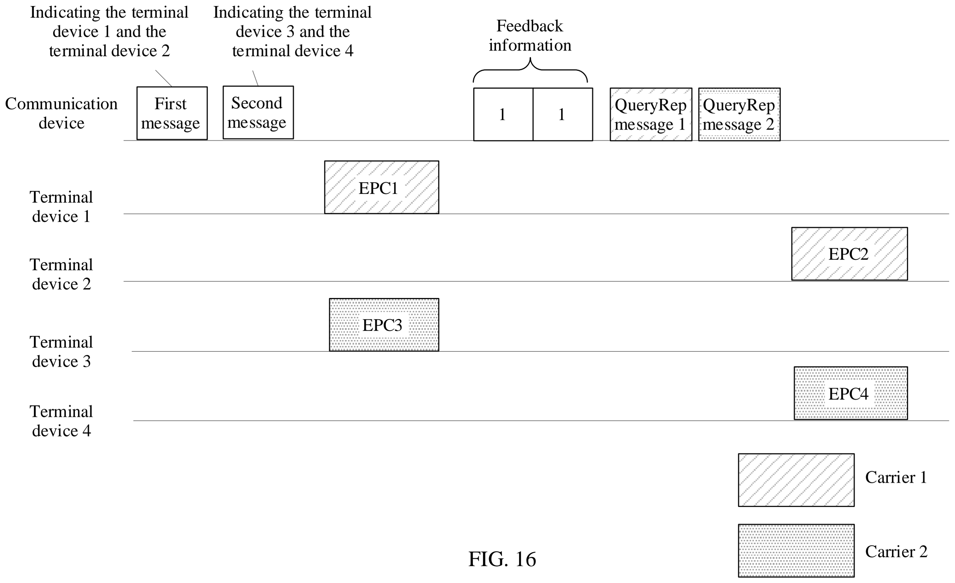

For example, as shown in FIG. 16, the first device group includes the terminal device 1 and the terminal device 2, and the second device group includes the terminal device 3 and the terminal device 4. The terminal device in the first device group transmits data with the communication device by using the carrier 1. The terminal device in the second device group transmits data with the communication device by using the carrier 2. After the terminal device 1 completes transmission, the communication device may send a QueryRep message 1 on the carrier 1. The QueryRep message 1 is used to trigger, on the carrier 1, a next terminal device to transmit data by using the carrier 1. After receiving the QueryRep message 1, the terminal device 2 transmits data with the communication device by using the carrier 1. After the terminal device 3 completes transmission, the communication device may send a QueryRep message 2 on the carrier 2. The QueryRep message 2 is used to trigger, on the carrier 2, a next terminal device to transmit data by using the carrier 2. After receiving the QueryRep message 2, the terminal device 4 transmits data with the communication device by using the carrier 2.

Alternatively, the QueryRep message 1 is not necessarily sent on the carrier 1, and the QueryRep message 2 is not necessarily sent on the carrier 2. The QueryRep message 1 may carry the index of the carrier 1, and the QueryRep message 2 may carry the index of the carrier 2, so that the terminal device distinguishes a carrier on which a message acts.

In a possible implementation, the first message includes a first flag bit, the second message includes a second flag bit, the first flag bit is different from the second flag bit, the first flag bit is used by the terminal device in the first device group to determine whether to respond to a received instruction, and the second flag bit is used by the terminal device in the second device group to determine whether to respond to a received instruction. Optionally, the first flag bit may also be referred to as a first inventory flag bit, and the second flag bit may also be referred to as a second inventory flag bit. Alternatively, the first flag bit and the second flag bit may be information of other names.

Optionally, when receiving the first message, the terminal device in the first device group may update a flag bit inside the terminal device in the first device group to the first flag bit. The communication device may select a terminal device whose flag bit is the first flag bit to perform data transmission. After the terminal device in the first device group completes data transmission with the communication device, the terminal device in the first device group updates the first flag bit to a third flag bit, where the third flag bit is different from the first flag bit and the second flag bit. Similarly, when receiving the second message, the terminal device in the second device group may update a flag bit inside the terminal device in the second device group to the second flag bit. The communication device may select a terminal device whose flag bit is the second flag bit to perform data transmission. After the terminal device in the second device group completes data transmission with the communication device, the terminal device in the second device group updates the second flag bit to a fourth flag bit, where the fourth flag bit is different from the first flag bit and the second flag bit.

For example, the first message is used for a service 1, the first message includes an inventory flag bit 1, the second message is used for a service 2, and the second message includes an inventory flag bit 2.

Based on this possible implementation, a problem of flag bit flipping interference caused by existence of a plurality of services is avoided.

In a possible implementation, transmission progresses of a plurality of terminal devices that are performing transmission on different carriers are the same. In other words, information transmitted by a plurality of terminal devices that are performing transmission on different carriers is information of a same type. For details, refer to the foregoing description of the transmission progress. Details are not described herein again. Transmission progresses of a plurality of terminal devices that are performing transmission on different carriers are enabled to be the same. This helps avoid a large difference between information transmission duration of the plurality of terminal devices that are performing transmission, thereby helping avoid an uplink resource waste.

In a possible implementation, in a same random access slot, if the terminal device in the first device group successfully performs random access on the first carrier, and the terminal device in the second device group fails to perform random access on the second carrier, next random access on the second carrier is triggered after the terminal device that successfully performs random access in the first device group completes data transmission. Based on this possible implementation, transmission progresses of a plurality of terminal devices that are performing transmission on different carriers are enabled to be the same, thereby avoiding an uplink resource waste.

In a possible implementation, if data transmission with the terminal device in the first device group by using the first carrier fails, retransmission scheduling is not performed for data transmitted by the terminal device in the first device group. Based on this possible implementation, transmission progresses of a plurality of terminal devices that are performing transmission on different carriers are enabled to be the same, thereby avoiding an uplink resource waste.

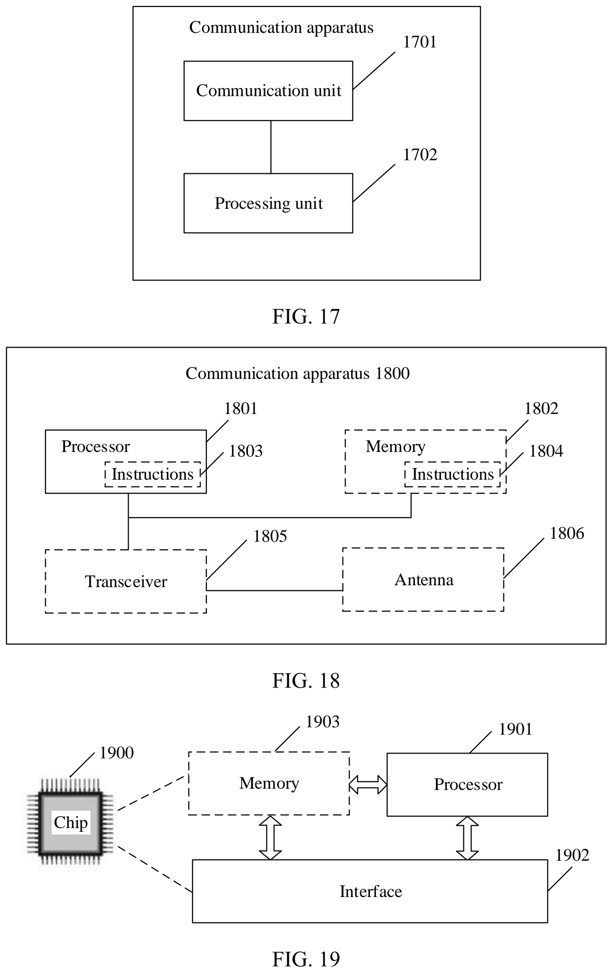

FIG. 17 is a diagram of a structure of a communication apparatus according to an embodiment of this application. The communication apparatus shown in FIG. 17 may be configured to perform some or all functions of the communication device in the foregoing method embodiments. The apparatus may be a communication device, an apparatus in a communication device, or an apparatus that can be used in cooperation with a communication device. The communication apparatus may alternatively be a chip system. The communication apparatus shown in FIG. 17 may include a communication unit 1701 and a processing unit 1702. The processing unit 1702 is configured to perform data processing. The communication unit 1701 is configured to perform communication. Optionally, a receiving unit and a sending unit are integrated in the communication unit 1701. The communication unit 1701 may also be referred to as a transceiver unit. Alternatively, the communication unit 1701 may be split into a receiving unit and a sending unit.

The communication unit 1701 is configured to send a first message, where the first message includes identification information of a first terminal device and information about a first carrier corresponding to the first terminal device. The communication unit 1701 is further configured to transmit data with the first terminal device by using the first carrier.

In a possible implementation, the first message further includes identification information of a second terminal device and information about a second carrier corresponding to the second terminal device, and the communication unit 1701 is further configured to transmit data with the second terminal device by using the second carrier.

In a possible implementation, the first message is a paging message or a select instruction.

In a possible implementation, the identification information is one piece of the following information: an identifier allocated by a core network, a subscriber identity module SIM card identifier, an application layer identifier, or a terminal device group identifier.

In a possible implementation, the information about the first carrier is a first bitmap, the first bitmap includes M bits, the M bits are in a one-to-one correspondence with M carriers, M is an integer greater than 1, a bit value of the first bitmap indicates a carrier corresponding to the first terminal device, and the carrier corresponding to the first terminal device includes the first carrier.

In a possible implementation, transmitting data with the first terminal device by using the first carrier includes: receiving, by using the first carrier, uplink data sent by the first terminal device.

The communication unit 1701 is further configured to send feedback information, where the feedback information indicates whether uplink data on M carriers is successfully transmitted, the M carriers include the first carrier, and M is an integer greater than 1; the feedback information includes a second bitmap, the second bitmap includes M bits, the M bits are in a one-to-one correspondence with the M carriers; a value of a first bit indicates whether uplink data on a carrier corresponding to the first bit is successfully transmitted, and the first bit is any bit in the second bitmap.

In a possible implementation, the first carrier corresponds to a plurality of terminal devices, and after transmitting data with the first terminal device by using the first carrier, the communication unit 1701 is further configured to send a second message, where
the second message is used to trigger, for a plurality of carriers, a next terminal device to transmit data by using a corresponding carrier, and the plurality of carriers include the first carrier; or
the second message is used to trigger a next terminal device to transmit data by using the first carrier, and the second message includes indication information indicating the first carrier, or the second message is carried on the first carrier.

In a possible implementation, if a terminal device corresponding to the first carrier succeeds in random access and a terminal device corresponding to the second carrier fails in random access in a same random access slot, next random access on the second carrier is triggered after the terminal device that succeeds in random access and that corresponds to the first carrier completes data transmission.

In a possible implementation, if data transmission with the first terminal device by using the first carrier fails, retransmission scheduling is not performed for data transmitted by the first terminal device.

FIG. 17 is a diagram of a structure of a communication apparatus according to an embodiment of this application. The communication apparatus shown in FIG. 17 may be configured to perform some or all functions of the first terminal device in the foregoing method embodiments. The apparatus may be a first terminal device, an apparatus in a first terminal device, or an apparatus that can be used together with a first terminal device. The communication apparatus may alternatively be a chip system. The communication apparatus shown in FIG. 17 may include a communication unit 1701 and a processing unit 1702. The processing unit 1702 is configured to perform data processing. The communication unit 1701 is configured to perform communication. Optionally, a receiving unit and a sending unit are integrated in the communication unit 1701. The communication unit 1701 may also be referred to as a transceiver unit. Alternatively, the communication unit 1701 may be split into a receiving unit and a sending unit.

The communication unit 1701 is configured to receive a first message sent by a communication device, where the first message includes identification information of the first terminal device and information about a first carrier corresponding to the first terminal device. The communication unit 1701 is further configured to transmit data with the communication device by using the first carrier.

In a possible implementation, the first message further includes identification information of a second terminal device and information about a second carrier corresponding to the second terminal device.

In a possible implementation, the first message is a paging message or a select instruction.

In a possible implementation, the identification information is one piece of the following information: an identifier allocated by a core network, a subscriber identity module SIM card identifier, an application layer identifier, or a terminal device group identifier.

In a possible implementation, the information about the first carrier is a first bitmap; and
the first bitmap includes M bits, the M bits are in a one-to-one correspondence with M carriers, M is an integer greater than 1, a bit value of the first bitmap indicates a carrier corresponding to the first terminal device, and the carrier corresponding to the first terminal device includes the first carrier.

In a possible implementation, transmitting data with the communication device by using the first carrier includes:
sending uplink data to the communication device by using the first carrier; and
the communication unit 1701 is further configured to receive feedback information sent by the communication device, where the feedback information indicates whether uplink data on M carriers is successfully transmitted, the M carriers include the first carrier, and M is an integer greater than 1; the feedback information includes a second bitmap, the second bitmap includes M bits, the M bits are in a one-to-one correspondence with the M carriers; a value of a first bit indicates whether uplink data on a carrier corresponding to the first bit is successfully transmitted, and the first bit is any bit in the second bitmap.

FIG. 17 is a diagram of a structure of a communication apparatus according to an embodiment of this application. The communication apparatus shown in FIG. 17 may be configured to perform some or all functions of the communication device in the foregoing method embodiments. The apparatus may be a communication device, an apparatus in a communication device, or an apparatus that can be used in cooperation with a communication device. The communication apparatus may alternatively be a chip system. The communication apparatus shown in FIG. 17 may include a communication unit 1701 and a processing unit 1702. The processing unit 1702 is configured to perform data processing. The communication unit 1701 is configured to perform communication. Optionally, a receiving unit and a sending unit are integrated in the communication unit 1701. The communication unit 1701 may also be referred to as a transceiver unit. Alternatively, the communication unit 1701 may be split into a receiving unit and a sending unit.

The communication unit 1701 is configured to: send a first message and a second message, where the first message indicates a first device group, the first device group includes one or more terminal devices, the second message indicates a second device group, and the second device group includes one or more terminal devices. The communication unit 1701 is further configured to: transmit data with a terminal device in the first device group by using a first carrier, and transmit data with a terminal device in the second device group by using a second carrier.

In a possible implementation, the first message and the second message are paging messages or select instructions.

In a possible implementation, the first message further includes first indication information, the second message further includes second indication information, the first indication information indicates the first carrier, and the second indication information indicates the second carrier.

In a possible implementation, transmitting data with the terminal device in the first device group by using the first carrier, and transmitting data with the terminal device in the second device group by using the second carrier includes:
receiving, by using the first carrier, uplink data sent by the terminal device in the first device group; and
receiving, by using the second carrier, uplink data sent by the terminal device in the second device group.

The communication unit 1701 is further configured to send first feedback information, where the first feedback information indicates whether uplink data on M carriers is successfully transmitted, the M carriers include the first carrier and the second carrier, and M is an integer greater than 1; the first feedback information includes a first bitmap, the first bitmap includes M bits, and the M bits are in a one-to-one correspondence with the M carriers; and a value of a first bit indicates whether uplink data on a carrier corresponding to the first bit is successfully transmitted, and the first bit is any bit in the first bitmap.

In a possible implementation, before transmitting data with the terminal device in the first device group by using the first carrier, and data is transmitted with the terminal device in the second device group by using the second carrier, the communication unit 1701 is further configured to: receive, by using the first carrier, a first random number sent by the terminal device in the first device group; receive, by using the second carrier, a second random number sent by the terminal device in the second device group; and send second feedback information and third feedback information, or send fourth feedback information, where the second feedback information indicates that the first random number is successfully transmitted, the third feedback information indicates that the second random number is successfully transmitted, and the fourth feedback information indicates that the first random number and the second random number are successfully transmitted.

In a possible implementation, before receiving, by using the first carrier, the first random number sent by the terminal device in the first device group, and receiving, by using the second carrier, the second random number sent by the terminal device in the second device group, the communication unit 1701 is further configured to send a third message, where the third message is used to trigger random access or trigger next random access on the first carrier and the second carrier.

In a possible implementation, the first message includes a first flag bit, the second message includes a second flag bit, the first flag bit is different from the second flag bit, the first flag bit is used by the terminal device in the first device group to determine whether to respond to a received instruction, and the second flag bit is used by the terminal device in the second device group to determine whether to respond to a received instruction.

In a possible implementation, in a same random access slot, if the terminal device in the first device group successfully performs random access on the first carrier, and the terminal device in the second device group fails to perform random access on the second carrier, next random access on the second carrier is triggered after the terminal device that successfully performs random access in the first device group completes data transmission.

In a possible implementation, if data transmission with the terminal device in the first device group by using the first carrier fails, retransmission scheduling is not performed for data transmitted by the terminal device in the first device group.

FIG. 17 is a diagram of a structure of a communication apparatus according to an embodiment of this application. The communication apparatus shown in FIG. 17 may be configured to perform some or all functions of the first terminal device in the foregoing method embodiments. The apparatus may be a first terminal device, an apparatus in a first terminal device, or an apparatus that can be used together with a first terminal device. The communication apparatus may alternatively be a chip system. The communication apparatus shown in FIG. 17 may include a communication unit 1701 and a processing unit 1702. The processing unit 1702 is configured to perform data processing. The communication unit 1701 is configured to perform communication. Optionally, a receiving unit and a sending unit are integrated in the communication unit 1701. The communication unit 1701 may also be referred to as a transceiver unit. Alternatively, the communication unit 1701 may be split into a receiving unit and a sending unit.

The communication unit 1701 is configured to receive a first message and a second message that are sent by a communication device, where the first message indicates a first device group, the first device group includes one or more terminal devices, the second message indicates a second device group, and the second device group includes one or more terminal devices; the communication unit 1701 is further configured to: if the first terminal device belongs to the terminal device in the first device group, transmit data with the communication device by using a first carrier; and the communication unit 1701 is further configured to: if the first terminal device belongs to the terminal device in the second device group, transmit data with the communication device by using a second carrier.

In a possible implementation, the first message and the second message are paging messages or select instructions.

In a possible implementation, the first message further includes first indication information, the second message further includes second indication information, the first indication information indicates the first carrier, and the second indication information indicates the second carrier.

In a possible implementation, transmitting data with the communication device by using the first carrier includes:
sending uplink data to the communication device by using the first carrier; and
transmitting data with the communication device by using the second carrier includes:
   sending uplink data to the communication device by using the second carrier.

The communication unit 1701 is further configured to receive first feedback information sent by the communication device, where the first feedback information indicates whether uplink data on M carriers is successfully transmitted, the M carriers include the first carrier and the second carrier, and M is an integer greater than 1; the first feedback information includes a first bitmap, the first bitmap includes M bits, and the M bits are in a one-to-one correspondence with the M carriers; and a value of a first bit indicates whether uplink data on a carrier corresponding to the first bit is successfully transmitted, and the first bit is any bit in the first bitmap.

In a possible implementation, before transmitting data with the communication device by using the first carrier, the communication unit 1701 is further configured to: send a first random number to the communication device by using the first carrier; and receive second feedback information or fourth feedback information sent by the communication device, where the second feedback information indicates that the first random number is successfully transmitted, and the fourth feedback information indicates that the first random number and the second random number are successfully transmitted; and
before transmitting data with the communication device by using the second carrier, the communication unit 1701 is further configured to: send a second random number to the communication device by using the second carrier; and receive third feedback information or the fourth feedback information sent by the communication device, where the third feedback information indicates that the second random number is successfully transmitted.

In a possible implementation, before sending the first random number to the communication device by using the first carrier, or before sending the second random number to the communication device by using the second carrier, the communication unit 1701 is further configured to receive a third message sent by the communication device, where the third message is used to trigger random access or trigger next random access on the first carrier and the second carrier.

In a possible implementation, the first message includes a first flag bit, the second message includes a second flag bit, the first flag bit is different from the second flag bit, the first flag bit is used by the terminal device in the first device group to determine whether to respond to a received instruction, and the second flag bit is used by the terminal device in the second device group to determine whether to respond to a received instruction.

FIG. 18 is a diagram of a structure of another communication apparatus. The communication apparatus 1800 may be the communication device or the first terminal device in the foregoing method embodiments, or may be a chip, a chip system, a processor, or the like that supports the communication device or the first terminal device in implementing the foregoing method. The communication apparatus may be configured to implement the methods described in the foregoing method embodiments. For details, refer to the descriptions in the foregoing method embodiments.

The communication apparatus 1800 may include one or more processors 1801. The processor 1801 may be a general purpose processor, a dedicated processor, or the like. For example, the processor may be a baseband processor or a central processing unit. The baseband processor may be configured to process a communication protocol and communication data. The central processing unit may be configured to: control a communication apparatus (for example, a base station, a baseband chip, a terminal, a terminal chip, a DU, or a CU), execute a software program, and process data of the software program.

Optionally, the communication apparatus 1800 may include one or more memories 1802. The memory may store instructions 1804, and the instructions may be run on the processor 1801, to enable the communication apparatus 1800 to perform the method described in the foregoing method embodiments. Optionally, the memory 1802 may further store data. The processor 1801 and the memory 1802 may be separately disposed, or may be integrated together.

Optionally, the communication apparatus 1800 may further include a transceiver 1805 and an antenna 1806. The transceiver 1805 may be referred to as a transceiver unit, a transceiver machine, a transceiver circuit, or the like, and is configured to implement receiving and sending functions. The transceiver 1805 may include a receiver and a transmitter. The receiver may be referred to as a receiver machine, a receiver circuit, or the like, and is configured to implement a receiving function. The transmitter may be referred to as a transmitter machine, a transmitter circuit, or the like, and is configured to implement a sending function. The processing unit 1702 shown in FIG. 17 may be the processor 1801. The communication unit 1701 may be the transceiver 1805.

In another possible design, the processor 1801 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In still another possible design, optionally, the processor 1801 may store instructions 1803, and the instructions 1803 are run on the processor 1801, to enable the communication apparatus 1800 to perform the method described in the foregoing method embodiments. The instructions 1803 may be solidified in the processor 1801. In this case, the processor 1801 may be implemented by hardware.

In still another possible design, the communication apparatus 1800 may include a circuit. The circuit may implement a sending, receiving, or communication function of the communication device or the first terminal device in the foregoing method embodiments. The processor and the transceiver described in this embodiment of this application may be implemented on an integrated circuit (integrated circuit, IC), an analog IC, a radio frequency integrated circuit RFIC, a hybrid signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-type metal oxide semiconductor (nMetal-oxide-semiconductor, NMOS), a P-type metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

The communication apparatus described in the foregoing embodiments may be a communication device or a first terminal device. However, a scope of the communication apparatus described in embodiments of this application is not limited thereto, and a structure of the communication apparatus may not be limited by FIG. 18. The communication apparatus may be an independent device or may be a part of a large device. For example, the communication apparatus may be:
(1) an independent integrated circuit IC, a chip, or a chip system or subsystem;
(2) a set that has one or more ICs, where optionally, the IC set may alternatively include a storage component configured to store data and an instruction;
(3) an ASIC, for example, a modem (MSM);
(4) a module that can be embedded in another device;
(5) a receiver, a terminal, an intelligent terminal, a cellular phone, a wireless device, a handheld device, a mobile unit, a vehicle-mounted device, a network device, a cloud device, an artificial intelligence device, or the like; or
(6) others.

When the communication apparatus may be a chip or a chip system, refer to a diagram of a structure of a chip in FIG. 19. The chip 1900 shown in FIG. 19 includes a processor 1901 and an interface 1902. Optionally, the chip may further include a memory 1903. There may be one or more processors 1901, and there may be a plurality of interfaces 1902.

For a case in which the chip is configured to implement a function of the communication device or the first terminal device in embodiments of this application,
the interface 1902 is configured to receive or output a signal; and
the processor 1901 is configured to perform a data processing operation of the communication device or the first terminal device.

It may be understood that, in some scenarios, some optional features in embodiments of this application may be independently implemented without depending on another feature, for example, a solution on which the optional features are currently based, to resolve a corresponding technical problem and achieve corresponding effect. Alternatively, in some scenarios, the optional features are combined with other features based on requirements. Correspondingly, the communication apparatus provided in embodiments of this application may also correspondingly implement these features or functions. Details are not described herein.

It should be noted that the processor in embodiments of this application may be an integrated circuit chip, and has a signal processing capability. In an implementation process, steps in the foregoing method embodiments can be implemented by using a hardware integrated logic circuit in the processor, or by using instructions in a form of software. The foregoing processor may be a general purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

This application further provides a computer-readable medium. The storage medium stores a computer program or instructions. When the computer program or the instructions are executed by a communication device, a function in any one of the foregoing method embodiments is implemented.

This application further provides a computer program product including instructions. When a computer reads and executes the computer program product, the computer is enabled to implement a function in any one of the foregoing method embodiments.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer instructions are loaded and executed on the computer, the procedure or functions according to the embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid state disk, SSD)), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data transmission method, wherein the method comprises:
sending a first message, wherein the first message comprises identification information of a first terminal device and information about a first carrier corresponding to the first terminal device; and
transmitting data with the first terminal device by using the first carrier.

2. The method according to claim 1, wherein the first message further comprises identification information of a second terminal device and information about a second carrier corresponding to the second terminal device; and
the method further comprises:
transmitting data with the second terminal device by using the second carrier.

3. The method according to claim 1 or 2, wherein the first message is a paging message or a select instruction.

4. The method according to any one of claims 1 to 3, wherein the identification information is one piece of the following information: an identifier allocated by a core network, a subscriber identity module SIM card identifier, an application layer identifier, or a terminal device group identifier.

5. The method according to claim 2, wherein the information about the first carrier is a first bitmap; and
the first bitmap comprises M bits, the M bits are in a one-to-one correspondence with M carriers, M is an integer greater than 1, a bit value of the first bitmap indicates a carrier corresponding to the first terminal device, and the carrier corresponding to the first terminal device comprises the first carrier.

6. The method according to claim 2, wherein transmitting data with the first terminal device by using the first carrier comprises:
receiving, by using the first carrier, uplink data sent by the first terminal device; and
the method further comprises:
sending feedback information, wherein the feedback information indicates whether uplink data on M carriers is successfully transmitted, the M carriers comprise the first carrier, and M is an integer greater than 1; the feedback information comprises a second bitmap, the second bitmap comprises M bits, the M bits are in a one-to-one correspondence with the M carriers; a value of a first bit indicates whether uplink data on a carrier corresponding to the first bit is successfully transmitted, and the first bit is any bit in the second bitmap.

7. The method according to any one of claims 1 to 6, wherein the first carrier corresponds to a plurality of terminal devices, and after transmitting data with the first terminal device by using the first carrier, the method further comprises:
sending a second message, wherein
the second message is used to trigger, for a plurality of carriers, a next terminal device to transmit data by using a corresponding carrier, and the plurality of carriers comprise the first carrier; or
the second message is used to trigger a next terminal device to transmit data by using the first carrier, and the second message comprises indication information indicating the first carrier, or the second message is carried on the first carrier.

8. The method according to claim 2, wherein if a terminal device corresponding to the first carrier succeeds in random access and a terminal device corresponding to the second carrier fails in random access in a same random access slot, next random access on the second carrier is triggered after the terminal device that succeeds in random access and that corresponds to the first carrier completes data transmission.

9. The method according to claim 2, wherein if data transmission with the first terminal device by using the first carrier fails, retransmission scheduling is not performed for data transmitted by the first terminal device.

10. A data transmission method, wherein the method is applicable to a first terminal device or a chip of the first terminal device, and the method comprises:
receiving a first message sent by a communication device, wherein the first message comprises identification information of the first terminal device and information about a first carrier corresponding to the first terminal device; and
transmitting data with the communication device by using the first carrier.

11. The method according to claim 10, wherein the first message further comprises identification information of a second terminal device and information about a second carrier corresponding to the second terminal device.

12. The method according to claim 10 or 11, wherein the first message is a paging message or a select instruction.

13. The method according to any one of claims 10 to 12, wherein the identification information is one piece of the following information: an identifier allocated by a core network, a subscriber identity module SIM card identifier, an application layer identifier, or a terminal device group identifier.

14. The method according to claim 11, wherein the information about the first carrier is a first bitmap; and
the first bitmap comprises M bits, the M bits are in a one-to-one correspondence with M carriers, M is an integer greater than 1, a bit value of the first bitmap indicates a carrier corresponding to the first terminal device, and the carrier corresponding to the first terminal device comprises the first carrier.

15. The method according to claim 11, wherein transmitting data with the communication device by using the first carrier comprises:
sending uplink data to the communication device by using the first carrier; and
the method further comprises:
receiving feedback information sent by the communication device, wherein the feedback information indicates whether uplink data on M carriers is successfully transmitted, the M carriers comprise the first carrier, and M is an integer greater than 1; the feedback information comprises a second bitmap, the second bitmap comprises M bits, the M bits are in a one-to-one correspondence with the M carriers; a value of a first bit indicates whether uplink data on a carrier corresponding to the first bit is successfully transmitted, and the first bit is any bit in the second bitmap.

16. A communication apparatus, comprising a unit configured to perform the method according to any one of claims 1 to 9, or comprising a unit configured to perform the method according to any one of claims 10 to 15.

17. A communication apparatus, comprising a processor and a memory, wherein the processor is coupled to the memory, and the processor is configured to implement the method according to any one of claims 1 to 9, or the processor is configured to implement the method according to any one of claims 10 to 15.

18. A chip, comprising a processor and an interface, wherein the processor is coupled to the interface, the interface is configured to receive or output a signal, and the processor is configured to execute code instructions, to perform the method according to any one of claims 1 to 9, or to perform the method according to any one of claims 10 to 15.

19. A computer-readable storage medium, wherein the computer-readable storage medium stores computer-executable instructions, and when the computer-executable instructions are invoked by the computer, the computer is enabled to perform the method according to any one of claims 1 to 9, or the computer is enabled to perform the method according to any one of claims 10 to 15.

20. A computer program product, wherein when the computer program product runs on a computer, the computer is enabled to perform the method according to any one of claims 1 to 9, or the computer is enabled to perform the method according to any one of claims 10 to 15.
